# EUROPEAN PATENT SPECIFICATION

(11) **EP 3 978 219 B1**
(45) Date of publication and mention of the grant of the patent: **07.06.2023**
(21) Application number: 21188989.4
(22) Date of filing: 02.08.2021
(51) Int. Cl.: B29C 45/76

(54) **INJECTION MOLDING MACHINE**
SPRITZGIESSMASCHINE
MACHINE DE MOULAGE À INJECTION

(30) Priority: 30.09.2020 JP 2020165158
(43) Date of publication of application: 06.04.2022
(73) Proprietor: Sumitomo Heavy Industries, Ltd., Tokyo 141-6025 (JP)
(72) Inventor: HOTTA, Daigo, Chiba, 263-0001 (JP); HIROTOMI, Yuta, Chiba, 263-0001 (JP); SATO, Yuta, Chiba, 263-0001 (JP); HIRANO, Hideomi, Chiba, 263-0001 (JP)
(74) Representative: Louis Pöhlau Lohrentz

(56) References cited:
- EP-A1- 3 372 378
- EP-A1- 3 546 185
- WO-A1-2019/189011
- DE-T5-112008 002 597
- US-A1- 2003 151 166

## Description

### BACKGROUND OF THE INVENTION

### Field of the Invention

The present invention relates to an injection molding machine.

### Description of Related Art

An injection molding machine disclosed in International Publication No. 2017/164420 has a stationary platen to which a stationary mold is attached, a movable platen to which a movable mold is attached, a toggle support disposed at an interval from the stationary platen, a tie bar connecting the stationary platen and the toggle support to each other, and a toggle mechanism for moving the movable platen in a mold opening and closing direction with respect to the toggle support. A mold unit is configured to include the stationary mold and the movable mold. International Publication No. WO 2019/189011 A1 discloses an injection molding machine in which a control cycle of monitoring control is longer than a control cycle of drive control. European Patent Publication No. EP 3 546 185 A1 discloses an injection molding machine capable of preventing an ejector rod from colliding with a mold. European Patent Publication No. EP 3 372 378 A1 discloses an injection molding machine in which the entire length thereof can be shortened. United States Patent Publication No. US 2003/151166 A1 discloses an injection compression molding method of forming a thin disk-shaped substrate as a thin molding by an injection molding machine, and a machine for carrying out the same. German Patent Publication No. DE 11 2008 002 597 T5 discloses a mold clamping control device and a mold clamping control method.

In some cases, a mold space of the mold unit may be changed due to a change in a temperature of the mold unit. The temperature of the mold unit tends to rise with a lapse of time. Accordingly, the mold space of the mold unit tends to increase with the lapse of time. However, in some cases, the mold space of the mold unit may decrease. When the mold space of the mold unit is changed, an actual value of a mold clamping force is inevitably changed.

Therefore, the injection molding machine disclosed in International Publication No. 2017/164420 has a mold space adjustment mechanism for adjusting an interval between the stationary platen and the toggle support. For example, the mold space adjustment mechanism includes a screw shaft formed in the tie bar, a screw nut attached to the toggle support to be rotatable, and a mold space adjustment motor that rotates the screw nut screwed to the screw shaft. The mold space adjustment mechanism adjusts a position of the toggle support to perform mold space adjustment.

### SUMMARY OF THE INVENTION

A control unit controls a moving mechanism, based on an actual value of a mold clamping force detected at a predetermined acquisition timing during a molding cycle . The moving mechanism moves a movable platen with respect to a stationary platen in a mold opening and closing direction. A detection value detected at the acquisition timing is the actual value of the mold clamping force used for controlling the moving mechanism.

The moving mechanism is controlled, based on the actual value of the mold clamping force, and for example, mold space adjustment is performed. The actual value of the mold clamping force is used for the mold space adjustment. When a deviation between the actual value of the mold clamping force and a set value falls out of an allowable range, the mold space adjustment is performed. On the other hand, when the deviation falls within the allowable range, the mold space adjustment is not performed.

In the related art, the acquisition timing for acquiring the actual value of the mold clamping force is stored in advance in a storage medium of the control unit, and cannot be changed. Therefore, user convenience is unfavorable. For example, when the actual value of the mold clamping force fluctuates during a mold clamping process, restrictions such as prohibiting the mold space adjustment are imposed, and thus, the user convenience is unfavorable. A reason for prohibiting the mold space adjustment is as follows. When the actual value of the mold clamping force fluctuates during the mold clamping process, if the acquisition timing of the actual value of the mold clamping force is unfavorable, an error of the actual value of the mold clamping force may increase.

One aspect of the present invention provides a technique for improving user convenience of an injection molding machine.

According to an aspect of the present invention, there is provided an injection molding machine including a moving mechanism configured to move a movable platen in a mold opening and closing direction with respect to a stationary platen, a mold clamping force detector configured to detect an actual value of a mold clamping force, a control unit configured to control the moving mechanism, based on the actual value of the mold clamping force detected at a predetermined acquisition timing during a molding cycle, and a display unit configured to display a setting screen to which the acquisition timing is input, in which the control unit is configured to acquire the actual value of the mold clamping force detected at the acquisition timing input to the setting screen, and the acquisition timing of the actual value of the mold clamping force is changed to assume a value lying between a mold closing process and a mold opening process, based on the acquisition timing input to the setting screen.

According to an aspect of the present invention, the acquisition timing of the actual value of the mold clamping force can be changed, and user convenience of the injection molding machine can be improved.

### BRIEF DESCRIPTION OF THE DRAWINGS

FIG. 1 is a view illustrating a state when mold opening is completed in an injection molding machine according to an embodiment.
FIG. 2 is a view illustrating a state when mold clamping is performed in the injection molding machine according to the embodiment.
FIG. 3 is a view illustrating an example of an operation of a mold clamping unit, and is a view illustrating a mold unit at time t0 in FIG. 9.
FIG. 4 is a view illustrating an example of an operation of the mold clamping unit subsequent to FIG. 3, and is a view illustrating the mold unit at time t1 in FIG. 9.
FIG. 5 is a view illustrating an example of an operation of the mold clamping unit subsequent to FIG. 4, and is a view illustrating the mold unit at time t2 in FIG. 9.
FIG. 6 is a view illustrating an example of an operation of the mold clamping unit subsequent to FIG. 5, and is a view illustrating the mold unit at time t3 in FIG. 9.
FIG. 7 is a view illustrating an example of an operation of the mold clamping unit subsequent to FIG. 6, and is a view illustrating the mold unit at time t4 in FIG. 9.
FIG. 8 is a view illustrating an example of a setting screen of mold clamping compression.
FIG. 9 is a view illustrating an example of a transition of a mold clamping force controlled in accordance with the setting screen of FIG. 8.
FIG. 10 is a functional block diagram illustrating an example of components of a control unit.
FIG. 11 is a view illustrating an example of the setting screen to which an acquisition timing of an actual value of the mold clamping force is input.
FIG. 12 is a view illustrating another example of the setting screen to which the acquisition timing of the actual value of the mold clamping force is input.

### DETAILED DESCRIPTION OF THE INVENTION

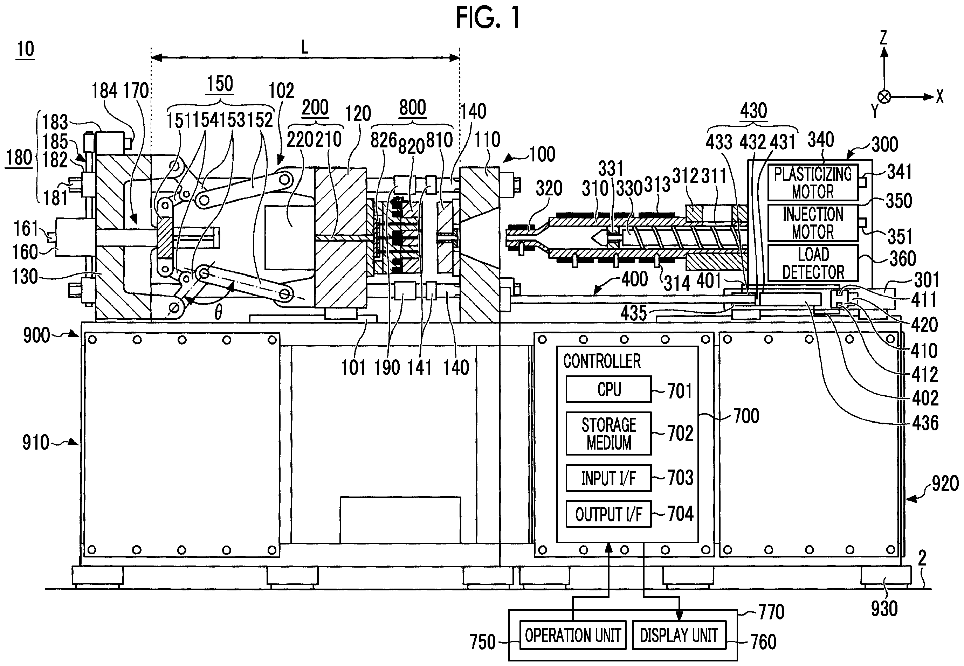

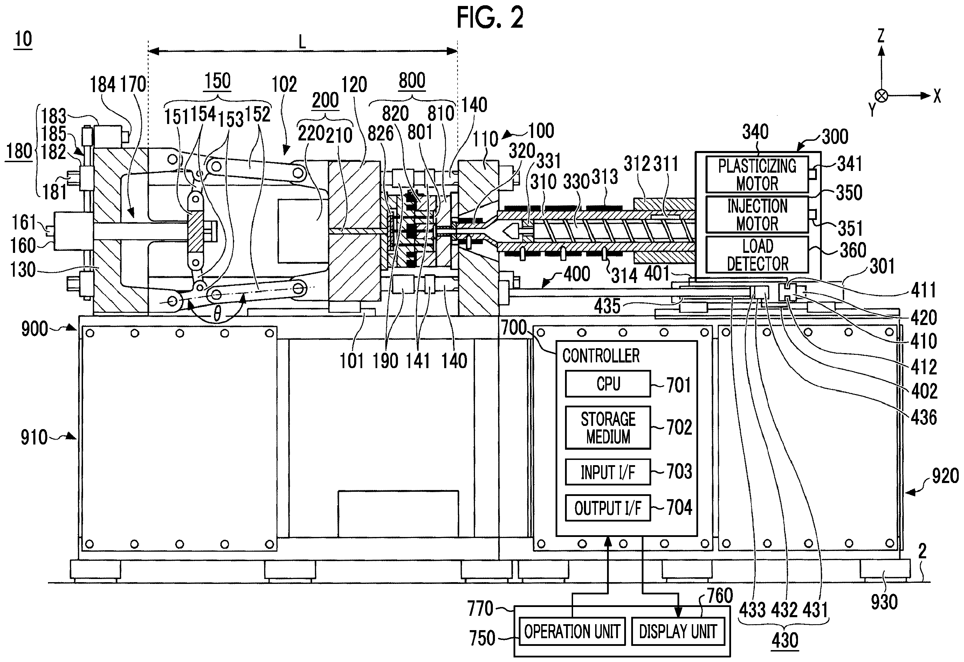

FIG. 1 is a view illustrating a state when mold opening is completed in an injection molding machine according to an embodiment. FIG. 2 is a view illustrating a state when mold clamping is performed in the injection molding machine according to the embodiment. In the present specification, an X-axial direction, a Y-axial direction, and a Z-axial direction are perpendicular to each other. The X-axial direction and the Y-axial direction represent a horizontal direction, and the Z-axial direction represents a vertical direction. When a mold clamping unit 100 is a horizontal type, the X-axial direction represents a mold opening and closing direction, and the Y-axial direction represents a width direction of the injection molding machine 10. A negative side in the Y-axial direction will be referred to as an operation side, and a positive side in the Y-axial direction will be referred to as an anti-operation side.

As illustrated in FIGS. 1 and 2, the injection molding machine 10 includes a mold clamping unit 100 that opens and closes a mold unit 800, an ejector unit 200 that ejects a molding product molded by the mold unit 800, an injection unit 300 that injects a molding material into the mold unit 800, a moving unit 400 that advances and retreats the injection unit 300 with respect to the mold unit 800, a control unit 700 that controls each component of the injection molding machine 10, and a frame 900 that supports each component of the injection molding machine 10. The frame 900 includes a mold clamping unit frame 910 that supports the mold clamping unit 100, and an injection unit frame 920 that supports the injection unit 300. The mold clamping unit frame 910 and the injection unit frame 920 are respectively installed on a floor 2 via a leveling adjuster 930. The control unit 700 is disposed in an internal space of the injection unit frame 920. Hereinafter, each component of the injection molding machine 10 will be described.

### (Mold Clamping Unit)

In describing the mold clamping unit 100, a moving direction of a movable platen 120 during mold closing (for example, a positive direction of an X-axis) will be defined as forward, and a moving direction of the movable platen 120 during mold opening (for example, a negative direction of the X-axis) will be defined as rearward.

The mold clamping unit 100 performs mold closing, pressurizing, mold clamping, depressurizing, and mold opening of the mold unit 800. The mold unit 800 includes a stationary mold 810 and a movable mold 820.

For example, the mold clamping unit 100 is a horizontal type, and the mold opening and closing direction is a horizontal direction. The mold clamping unit 100 has a stationary platen 110 to which the stationary mold 810 is attached, a movable platen 120 to which the movable mold 820 is attached, and a moving mechanism 102 that moves the movable platen 120 in the mold opening and closing direction with respect to the stationary platen 110.

The stationary platen 110 is fixed to the mold clamping unit frame 910. The stationary mold 810 is attached to a facing surface of the stationary platen 110 which faces the movable platen 120.

The movable platen 120 is disposed to be movable in the mold opening and closing direction with respect to the mold clamping unit frame 910. A guide 101 that guides the movable platen 120 is laid on the mold clamping unit frame 910. The movable mold 820 is attached to a facing surface of the movable platen 120 which faces the stationary platen 110.

The movable platen 120 is advanced and retreated with respect to the stationary platen 110. In this manner, the moving mechanism 102 performs mold closing, pressurizing, mold clamping, depressurizing, and mold opening of the mold unit 800. The moving mechanism 102 has a toggle support 130 disposed at an interval from the stationary platen 110, a tie bar 140 that connects the stationary platen 110 and the toggle support 130 to each other, a toggle mechanism 150 that moves the movable platen 120 in the mold opening and closing direction with respect to the toggle support 130, a mold clamping motor 160 that operates the toggle mechanism 150, a motion conversion mechanism 170 that converts a rotary motion into a linear motion of the mold clamping motor 160, and a mold space adjustment mechanism 180 that adjusts an interval between the stationary platen 110 and the toggle support 130.

The toggle support 130 is disposed at an interval from the stationary platen 110, and is mounted on the mold clamping unit frame 910 to be movable in the mold opening and closing direction. The toggle support 130 may be disposed to be movable along a guide laid on the mold clamping unit frame 910. The guide of the toggle support 130 may be common to the guide 101 of the movable platen 120.

In the present embodiment, the stationary platen 110 is fixed to the mold clamping unit frame 910, and the toggle support 130 is disposed to be movable in the mold opening and closing direction with respect to the mold clamping unit frame 910. However, the toggle support 130 may be fixed to the mold clamping unit frame 910, and the stationary platen 110 may be disposed to be movable in the mold opening and closing direction with respect to the mold clamping unit frame 910.

The tie bar 140 connects the stationary platen 110 and the toggle support 130 to each other at an interval L in the mold opening and closing direction. A plurality of (for example, four) tie bars 140 may be used. The plurality of tie bars 140 are disposed parallel to each other in the mold opening and closing direction, and extend in accordance with a mold clamping force. At least one of the tie bars 140 may be provided with a tie bar strain detector 141 that detects a strain of the tie bar 140. The tie bar strain detector 141 transmits a signal indicating a detection result thereof to the control unit 700. The detection result of the tie bar strain detector 141 is used in detecting the mold clamping force.

In the present embodiment, as a mold clamping force detector for detecting the mold clamping force, the tie bar strain detector 141 is used. However, the present invention is not limited thereto. The mold clamping force detector is not limited to a strain gauge type. The mold clamping force detector may be a piezoelectric type, a capacitive type, a hydraulic type, or an electromagnetic type, and an attachment position thereof is not limited to the tie bar 140.

The toggle mechanism 150 is disposed between the movable platen 120 and the toggle support 130, and moves the movable platen 120 in the mold opening and closing direction with respect to the toggle support 130. The toggle mechanism 150 has a crosshead 151 that moves in the mold opening and closing direction, and a pair of link groups bent and stretched by a movement of the crosshead 151. Each of the pair of link groups has a first link 152 and a second link 153 which are connected to be freely bent and stretched by a pin. The first link 152 is attached to the movable platen 120 to freely oscillate by a pin. The second link 153 is attached to the toggle support 130 to freely oscillate by a pin. The second link 153 is attached to the crosshead 151 via a third link 154. When the crosshead 151 is advanced and retreated with respect to the toggle support 130, the first link 152 and the second link 153 are bent and stretched, and the movable platen 120 is advanced and retreated with respect to the toggle support 130.

A configuration of the toggle mechanism 150 is not limited to configurations illustrated in FIGS. 1 and 2. For example, in FIGS. 1 and 2, the number of nodes in each link group is five, but may be four. One end portion of the third link 154 may be connected to the node between the first link 152 and the second link 153.

The mold clamping motor 160 is attached to the toggle support 130, and operates the toggle mechanism 150. The mold clamping motor 160 advances and retreats the crosshead 151 with respect to the toggle support 130. In this manner, the first link 152 and second link 153 are bent and stretched so that the movable platen 120 is advanced and retreated with respect to the toggle support 130. The mold clamping motor 160 is directly connected to the motion conversion mechanism 170, but may be connected to the motion conversion mechanism 170 via a belt or a pulley.

The motion conversion mechanism 170 converts a rotary motion of the mold clamping motor 160 into a linear motion of the crosshead 151. The motion conversion mechanism 170 includes a screw shaft and a screw nut screwed to the screw shaft. A ball or a roller may be interposed between the screw shaft and the screw nut.

The mold clamping unit 100 performs a mold closing process, a pressurizing process, a mold clamping process, a depressurizing process, and a mold opening process under the control of the control unit 700.

In the mold closing process, the mold clamping motor 160 is driven to advance the movable platen 120 by advancing the crosshead 151 to a mold closing completion position at a set movement speed. In this manner, the movable mold 820 is caused to touch the stationary mold 810. For example, a position or a movement speed of the crosshead 151 is detected by using a mold clamping motor encoder 161. The mold clamping motor encoder 161 detects rotation of the mold clamping motor 160, and transmits a signal indicating a detection result thereof to the control unit 700.

A crosshead position detector for detecting a position of the crosshead 151 and a crosshead movement speed detector for measuring a movement speed of the crosshead 151 are not limited to the mold clamping motor encoder 161, and a general detector can be used. In addition, a movable platen position detector for detecting a position of the movable platen 120 and a movable platen movement speed detector for measuring a movement speed of the movable platen 120 are not limited to the mold clamping motor encoder 161, and a general detector can be used.

In the pressurizing process, the mold clamping motor 160 is further driven to further advance the crosshead 151 from the mold closing completion position to a mold clamping position, thereby generating a mold clamping force.

In the mold clamping process, the mold clamping motor 160 is driven to maintain a position of the crosshead 151 at the mold clamping position. In the mold clamping process, the mold clamping force generated in the pressurizing process is maintained. In the mold clamping process, a cavity space 801 (refer to FIG. 2) is formed between the movable mold 820 and the stationary mold 810, and the injection unit 300 fills the cavity space 801 with a liquid molding material. A molding product is obtained by solidifying the molding material filled therein.

The number of the cavity spaces 801 may be one or more. In the latter case, a plurality of the molding products can be obtained at the same time. An insert material may be disposed in a portion of the cavity space 801, and the other portion of the cavity space 801 may be filled with the molding material. A molding product in which the insert material and the molding material are integrated with each other can be obtained.

In the depressurizing process, the mold clamping motor 160 is driven to retreat the crosshead 151 from the mold clamping position to a mold opening start position. In this manner, the movable platen 120 is retreated to reduce the mold clamping force. The mold opening start position and the mold closing completion position may be the same position.

In the mold opening process, the mold clamping motor 160 is driven to retreat the crosshead 151 from the mold opening start position to the mold opening completion position at a set movement speed. In this manner, the movable platen 120 is retreated so that the movable mold 820 is separated from the stationary mold 810. Thereafter, the ejector unit 200 ejects the molding product from the movable mold 820.

Setting conditions in the mold closing process, the pressurizing process, and the mold clamping process are collectively set as a series of setting conditions. For example, the movement speed or positions of the crosshead 151 (including the mold closing start position, the movement speed switching position, the mold closing completion position, and the mold clamping position) and the mold clamping force in the mold closing process and the pressurizing process are collectively set as a series of setting conditions. The mold closing start position, the movement speed switching position, the mold closing completion position, and the mold clamping position are aligned in this order from a rear side toward a front side, and represent a start point and an end point of a section in which the movement speed is set. The movement speed is set for each section. The number of the movement speed switching positions may be one or more. The movement speed switching position may not be set. Only one of the mold clamping position and the mold clamping force may be set.

The setting conditions in the depressurizing process and the mold opening process are set in the same manner . For example, the movement speed or positions (the mold opening start position, the movement speed switching position, and the mold opening completion position) of the crosshead 151 in the depressurizing process and the mold opening process are collectively set as a series of setting conditions. The mold opening start position, the movement speed switching position, and the mold opening completion position are aligned in this order from the front side toward the rear side, and represent the start point and the end point of the section in which the movement speed is set. The movement speed is set for each section. The number of the movement speed switching positions may be one or more. The movement speed switching position may not be set. The mold opening start position and the mold closing completion position may be the same position. In addition, the mold opening completion position and the mold closing start position may be the same position.

Instead of the movement speed or the position of the crosshead 151, the movement speed or the positions of the movable platen 120 may be set. In addition, instead of the position (for example, the mold clamping position) of the crosshead or the position of the movable platen, the mold clamping force may be set.

Incidentally, the toggle mechanism 150 amplifies a driving force of the mold clamping motor 160, and transmits the driving force to the movable platen 120. An amplification magnification is referred to as a toggle magnification. The toggle magnification is changed according to an angle θ (hereinafter, also referred to as a "link angle θ") formed between the first link 152 and the second link 153. The link angle θ is obtained from the position of the crosshead 151. When the link angle θ is 180°, the toggle magnification is maximized.

When a mold space of the mold unit 800 is changed due to replacement of the mold unit 800 or a temperature change in the mold unit 800, mold space adjustment is performed so that a predetermined mold clamping force is obtained during the mold clamping. For example, in the mold space adjustment, the interval L between the stationary platen 110 and the toggle support 130 is adjusted so that the link angle θ of the toggle mechanism 150 becomes a predetermined angle when the movable mold 820 touches the stationary mold 810.

The mold clamping unit 100 has the mold space adjustment mechanism 180. The mold space adjustment mechanism 180 performs the mold space adjustment by adjusting the interval L between the stationary platen 110 and the toggle support 130. For example, a timing for the mold space adjustment is determined from an end point of a molding cycle to a start point of a subsequent molding cycle. For example, the mold space adjustment mechanism 180, has a screw shaft 181 formed in a rear end portion of the tie bar 140, a screw nut 182 held by the toggle support 130 to be rotatable and not to be advanced and retreated, and a mold space adjustment motor 183 that rotates the screw nut 182 screwed to the screw shaft 181.

The screw shaft 181 and the screw nut 182 are provided for each of the tie bars 140. A rotational driving force of the mold space adjustment motor 183 may be transmitted to a plurality of the screw nuts 182 via a rotational driving force transmitting unit 185. The plurality of screw nuts 182 can be rotated in synchronization with each other. The plurality of screw nuts 182 can be individually rotated by changing a transmission channel of the rotational driving force transmitting unit 185.

For example, the rotational driving force transmitting unit 185 is configured to include a gear. In this case, a driven gear is formed on an outer periphery of each screw nut 182, a driving gear is attached to an output shaft of the mold space adjustment motor 183, and a plurality of intermediate gears meshing with the driven gear and the driving gear are held to be rotatable in a central portion of the toggle support 130. The rotational driving force transmitting unit 185 may be configured to include a belt or a pulley instead of the gear.

An operation of the mold space adjustment mechanism 180 is controlled by the control unit 700. The control unit 700 drives the mold space adjustment motor 183 to rotate the screw nut 182. As a result, a position of the toggle support 130 with respect to the tie bar 140 is adjusted, and the interval L between the stationary platen 110 and the toggle support 130 is adjusted. In addition, a plurality of the mold space adjustment mechanisms may be used in combination.

The interval L is detected by using the mold space adjustment motor encoder 184. The mold space adjustment motor encoder 184 detects a rotation amount or a rotation direction of the mold space adjustment motor 183, and transmits a signal indicating a detection result thereof to the control unit 700. The detection result of the mold space adjustment motor encoder 184 is used in monitoring or controlling the position or the interval L of the toggle support 130. A toggle support position detector for detecting the position of the toggle support 130 and an interval detector for detecting the interval L are not limited to the mold space adjustment motor encoder 184, and a general detector can be used.

The mold clamping unit 100 may have a tie bar temperature controller 190 that controls a temperature of the tie bar 140. For example, the tie bar temperature controller 190 includes a heating unit such as a heater. The heating unit heats the tie bar 140. The tie bar temperature controller 190 may include a cooler such as a water cooling jacket. The cooler cools the tie bar 140. The tie bar temperature controller 190 may include both the heating unit and the cooler.

The tie bar temperature controller 190 controls the temperature of the tie bar 140 to adjust a length of the tie bar 140. As the temperature of the tie bar 140 rises, thermal expansion of the tie bar 140 increases, and the length of the tie bar 140 is lengthened. When the length of the tie bar 140 is changed, a distribution of a contact pressure generated on a split surface (so-called parting surface) of the stationary mold 810 and the movable mold 820 during the mold clamping is changed. The temperature of the tie bar 140 is controlled so that the distribution reaches a desired distribution.

The control unit 700 detects the distribution of the contact pressure generated on the split surface of the stationary mold 810 and the movable mold 820 during the mold clamping by using the plurality of tie bar strain detectors 141 attached to the plurality of tie bars 140. Then, the control unit 700 controls the temperature of the tie bar 140 so that the contact pressure distribution reaches the desired distribution. The tie bar temperature controller 190 is attached to one or more tie bars 140 to control the temperature of one or more tie bars 140.

The mold clamping unit 100 of the present embodiment is the horizontal type in which the mold opening and closing direction is the horizontal direction, but may be a vertical type in which the mold opening and closing direction is an upward-downward direction.

The mold clamping unit 100 of the present embodiment has the mold clamping motor 160 as a drive source. However, a hydraulic cylinder may be provided instead of the mold clamping motor 160. In addition, the mold clamping unit 100 may have a linear motor for mold opening and closing, and may have an electromagnet for mold clamping.

### (Ejector Unit)

In describing the ejector unit 200, similarly to the description of the mold clamping unit 100, a moving direction of the movable platen 120 during the mold closing (for example, the positive direction of the X-axis) will be defined as forward, and a moving direction of the movable platen 120 during the mold opening (for example, the negative direction of the X-axis) will be defined as rearward.

The ejector unit 200 is attached to the movable platen 120, and is advanced and retreated together with the movable platen 120. The ejector unit 200 has an ejector rod 210 that ejects a molding product from the mold unit 800, and a drive mechanism 220 that moves the ejector rod 210 in the moving direction (X-axial direction) of the movable platen 120.

The ejector rod 210 is disposed to be freely advanced and retreated in a through-hole of the movable platen 120. A front end portion of the ejector rod 210 comes into contact with an ejector plate 826 of the movable mold 820. The front end portion of the ejector rod 210 may be connected to or may not be connected to the ejector plate 826.

For example, the drive mechanism 220 has an ejector motor and a motion conversion mechanism that converts a rotary motion of the ejector motor into a linear motion of the ejector rod 210. The motion conversion mechanism includes a screw shaft and a screw nut screwed to the screw shaft. A ball or a roller may be interposed between the screw shaft and the screw nut.

The ejector unit 200 performs an ejection process under the control of the control unit 700. In the ejection process, the ejector rod 210 is advanced from a standby position to an ejection position at a set movement speed. In this manner, the ejector plate 826 is advanced to eject the molding product. Thereafter, the ejector motor is driven to retreat the ejector rod 210 at a set movement speed, and the ejector plate 826 is retreated to an original standby position.

For example, a position or a movement speed of the ejector rod 210 is detected by using an ejector motor encoder. The ejector motor encoder detects the rotation of the ejector motor, and transmits a signal indicating a detection result thereof to the control unit 700. An ejector rod position detector for detecting the position of the ejector rod 210, and an ejector rod movement speed detector for measuring the movement speed of the ejector rod 210 are not limited to the ejector motor encoder, and a general detector can be used.

### (Injection Unit)

In describing the injection unit 300, unlike the description of the mold clamping unit 100 or the description of the ejector unit 200, a moving direction of the screw 330 during filling (for example, the negative direction of the X-axis) will be defined as forward, and a moving direction of the screw 330 during plasticizing (for example, the positive direction of the X-axis) will be defined as rearward.

The injection unit 300 is installed in a slide base 301, and the slide base 301 is disposed to be freely advanced and retreated with respect to the injection unit frame 920. The injection unit 300 is disposed as to be freely advanced and retreated with respect to the mold unit 800. The injection unit 300 touches the mold unit 800, and fills the cavity space 801 inside the mold unit 800 with a molding material. For example, the injection unit 300 has a cylinder 310 that heats the molding material, a nozzle 320 provided in a front end portion of the cylinder 310, a screw 330 disposed to be freely advanced and retreated and rotatable inside the cylinder 310, a plasticizing motor 340 that rotates the screw 330, an injection motor 350 that advances and retreats the screw 330, and a load detector 360 that measures a load transmitted between the injection motor 350 and the screw 330.

The cylinder 310 heats the molding material supplied into the cylinder 310 from a feed port 311. For example, the molding material includes a resin. For example, the molding material is formed in a pellet shape, and is supplied to the feed port 311 in a solid state. The feed port 311 is formed in a rear portion of the cylinder 310. A cooler 312 such as a water-cooling cylinder is provided on an outer periphery of the rear portion of the cylinder 310. In front of the cooler 312, a heating unit 313 such as a band heater and a temperature measurer 314 are provided on an outer periphery of the cylinder 310.

The cylinder 310 is divided into a plurality of zones in the axial direction (for example, the X-axial direction) of the cylinder 310. The heating unit 313 and the temperature measurer 314 are provided in each of the plurality of zones. The control unit 700 controls the heating unit 313 so that a set temperature is set in each of the plurality of zones and a measurement temperature of the temperature measurer 314 reaches the set temperature.

The nozzle 320 is provided in a front end portion of the cylinder 310, and is pressed against the mold unit 800. The heating unit 313 and the temperature measurer 314 are provided on the outer periphery of the nozzle 320. The control unit 700 controls the heating unit 313 so that a measurement temperature of the nozzle 320 reaches the set temperature.

The screw 330 is disposed to be rotatable and to be freely advanced and retreated inside the cylinder 310. When the screw 330 is rotated, the molding material is fed forward along a helical groove of the screw 330. The molding material is gradually melted by heat from the cylinder 310 while being fed forward. As the liquid molding material is fed forward of the screw 330 and is accumulated in a front portion of the cylinder 310, the screw 330 is retreated. Thereafter, when the screw 330 is advanced, the liquid molding material accumulated in front of the screw 330 is injected from the nozzle 320, and fills the inside of the mold unit 800.

As a backflow prevention valve for preventing a backflow of the molding material fed rearward from the front of the screw 330 when the screw 330 is pressed forward, a backflow prevention ring 331 is attached to the front portion of the screw 330 to be freely advanced and retreated.

The backflow prevention ring 331 is pressed rearward by the pressure of the molding material in front of the screw 330 when the screw 330 is advanced, and is relatively retreated with respect to the screw 330 to a close position (refer to FIG. 2) for closing a flow path of the molding material. In this manner, the molding material accumulated in front of the screw 330 is prevented from flowing rearward.

On the other hand, the backflow prevention ring 331 is pressed forward by the pressure of the molding material fed forward along the helical groove of the screw 330 when the screw 330 is rotated, and is relatively advanced with respect to the screw 330 to an open position (refer to FIG. 1) for opening the flow path of the molding material. In this manner, the molding material is fed forward of the screw 330.

The backflow prevention ring 331 may be either a co-rotation type rotating together with the screw 330 or a non-co-rotation type that does not rotate together with the screw 330.

The injection unit 300 may have a drive source that advances and retreats the backflow prevention ring 331 with respect to the screw 330 between the open position and the close position.

The plasticizing motor 340 rotates the screw 330. The drive source for rotating the screw 330 is not limited to the plasticizing motor 340, and may be a hydraulic pump, for example.

The injection motor 350 advances and retreats the screw 330. A motion conversion mechanism that converts a rotary motion of the injection motor 350 into a linear motion of the screw 330 is provided between the injection motor 350 and the screw 330. For example, the motion conversion mechanism has a screw shaft and a screw nut screwed to the screw shaft. A ball or a roller may be provided between the screw shaft and the screw nut. The drive source that advances and retreats the screw 330 is not limited to the injection motor 350, and may be a hydraulic cylinder, for example.

The load detector 360 measures a load transmitted between the injection motor 350 and the screw 330. The detected load is converted into the pressure by the control unit 700. The load detector 360 is provided in a load transmission channel between the injection motor 350 and the screw 330, and measures the load acting on the load detector 360.

The load detector 360 transmits a signal of the detected load to the control unit 700. The load detected by the load detector 360 is converted into the pressure acting between the screw 330 and the molding material, and is used in controlling or monitoring the pressure received from the molding material by the screw 330, a back pressure against the screw 330, or the pressure acting on the molding material from the screw 330.

The pressure detector for detecting the pressure of the molding material is not limited to the load detector 360, and a general detector can be used. For example, a nozzle pressure sensor or a mold internal pressure sensor may be used. The nozzle pressure sensor is installed in the nozzle 320. The mold internal pressure sensor is installed inside the mold unit 800.

The injection unit 300 performs a plasticizing process, a filling process, and a holding pressure process under the control of the control unit 700. The filling process and the holding pressure process may be collectively referred to as an injection process.

In the plasticizing process, the plasticizing motor 340 is driven to rotate the screw 330 at a set rotational speed, and the molding material is fed forward along the helical groove of the screw 330. As a result, the molding material is gradually melted. As the liquid molding material is fed forward of the screw 330 and is accumulated in a front portion of the cylinder 310, the screw 330 is retreated. For example, a rotational speed of the screw 330 is measured by using a plasticizing motor encoder 341. The plasticizing motor encoder 341 detects the rotation of the plasticizing motor 340, and transmits a signal indicating a detection result thereof to the control unit 700. A screw rotational speed detector for measuring the rotational speed of the screw 330 is not limited to the plasticizing motor encoder 341, and a general detector can be used.

In the plasticizing process, the injection motor 350 may be driven to apply a preset back pressure to the screw 330 in order to limit sudden retreat of the screw 330. The back pressure applied to the screw 330 is measured by using the load detector 360, for example. When the screw 330 is retreated to a plasticizing completion position and a predetermined amount of the molding material is accumulated in front of the screw 330, the plasticizing process is completed.

The position and the rotational speed of the screw 330 in the plasticizing process are collectively set as a series of setting conditions. For example, a plasticizing start position, a rotating speed switching position, and a plasticizing completion position are set. The positions are aligned in this order from the front side toward the rear side, and represent the start point and the end point of the section in which the rotational speed is set. The rotational speed is set for each section. The number of the rotating speed switching positions may be one or more. The rotating speed switching position may not be set. In addition, the back pressure is set for each section.

In the filling process, the injection motor 350 is driven to advance the screw 330 at a set movement speed, and the cavity space 801 inside the mold unit 800 is filled with the liquid molding material accumulated in front of the screw 330. The position or the movement speed of the screw 330 is detected by using an injection motor encoder 351, for example. The injection motor encoder 351 detects the rotation of the injection motor 350, and transmits a signal indicating a detection result thereof to the control unit 700. When the position of the screw 330 reaches a set position, the filling process is switched to the holding pressure process (so-called V/P switching). The position where the V/P switching is performed will be referred to as a V/P switching position. The set movement speed of the screw 330 may be changed in accordance with the position or a time of the screw 330.

The position and the movement speed of the screw 330 in the filling process are collectively set as a series of setting conditions. For example, a filling start position (also referred to as an "injection start position"), the movement speed switching position, and the V/P switching position are set. The positions are aligned in this order from the rear side toward the front side, and represent the start point and the end point of the section in which the movement speed is set. The movement speed is set for each section. The number of the movement speed switching positions may be one or more. The movement speed switching position may not be set.

An upper limit value of the pressure of the screw 330 is set for each section in which the movement speed of the screw 330 is set. The pressure of the screw 330 is measured by the load detector 360. When the pressure of the screw 330 is equal to or lower than a setting pressure, the screw 330 is advanced at a set movement speed. On the other hand, when the pressure of the screw 330 exceeds the setting pressure, in order to protect the mold, the screw 330 is advanced at the movement speed lower than the set movement speed so that the pressure of the screw 330 is equal to or lower than the setting pressure.

After the position of the screw 330 reaches the V/P switching position in the filling process, the screw 330 may be temporarily stopped at the V/P switching position, and thereafter, the V/P switching may be performed. Immediately before the V/P switching, instead of stopping the screw 330, the screw 330 may be advanced at a low speed, or may be retreated at a low speed. In addition, a screw position detector for detecting the position of the screw 330 and a screw movement speed detector for measuring the movement speed of the screw 330 are not limited to the injection motor encoder 351, and a general detector can be used.

In the holding pressure process, the injection motor 350 is driven to press the screw 330 forward. A pressure (hereinafter, also referred to as a "holding pressure") of the molding material in the front end portion of the screw 330 is held at a setting pressure, and the molding material remaining inside the cylinder 310 is pressed toward the mold unit 800. The molding material which is insufficient due to cooling shrinkage inside the mold unit 800 can be replenished. The holding pressure is measured by using the load detector 360, for example. A set value of the holding pressure may be changed depending on an elapsed time from the start of the holding pressure process. The holding pressure and a holding time for holding the holding pressure in the holding pressure process may be respectively set, or may be collectively set as a series of setting conditions.

In the holding pressure process, the molding material in the cavity space 801 inside the mold unit 800 is gradually cooled, and when the holding pressure process is completed, an inlet of the cavity space 801 is closed by the solidified molding material. This state is referred to as gate seal, and prevents the backflow of the molding material from the cavity space 801. After the holding pressure process, a cooling process starts. In the cooling process, the molding material inside the cavity space 801 is solidified. In order to shorten a molding cycle time, the plasticizing process may be performed during the cooling process.

The injection unit 300 of the present embodiment is an in-line screw type, but may be a pre-plastic type. The injection unit of the pre-plastic type supplies the molding material melted inside a plasticizing cylinder to an injection cylinder, and the molding material is injected into the mold unit from the injection cylinder. Inside the plasticizing cylinder, the screw is disposed to be rotatable and not to be advanced and retreated, or the screw is disposed to be rotatable and to be freely advanced and retreated. On the other hand, a plunger is disposed to be freely advanced and retreated inside the injection cylinder.

In addition, the injection unit 300 of the present embodiment is a horizontal type in which the axial direction of the cylinder 310 is a horizontal direction, but may be a vertical type in which the axial direction of the cylinder 310 is an upward-downward direction. The mold clamping unit combined with the injection unit 300 of the vertical type may be the vertical type or the horizontal type. Similarly, the mold clamping unit combined with the injection unit 300 of the horizontal type may be the horizontal type or the vertical type.

### (Moving Unit)

In describing the moving unit 400, similarly to the description of the injection unit 300, a moving direction of the screw 330 during the filling (for example, the negative direction of the X-axis) will be defined as forward, and a moving direction of the screw 330 during the plasticizing (for example, the positive direction of the X-axis) will be defined as rearward.

The moving unit 400 advances and retreats the injection unit 300 with respect to the mold unit 800. The moving unit 400 presses the nozzle 320 against the mold unit 800, thereby generating a nozzle touch pressure. The moving unit 400 includes a hydraulic pump 410, a motor 420 serving as a drive source, and a hydraulic cylinder 430 serving as a hydraulic actuator.

The hydraulic pump 410 has a first port 411 and a second port 412. The hydraulic pump 410 is a pump that can rotate in both directions, and switches rotation directions of the motor 420. In this manner, a hydraulic fluid (for example, oil) is sucked from any one of the first port 411 and the second port 412, and is discharged from the other to generate a hydraulic pressure. The hydraulic pump 410 can suck the hydraulic fluid from a tank, and can discharge the hydraulic fluid from any one of the first port 411 and the second port 412.

The motor 420 operates the hydraulic pump 410. The motor 420 drives the hydraulic pump 410 in a rotation direction and with a rotation torque in accordance with a control signal transmitted from the control unit 700. The motor 420 may be an electric motor, or may be an electric servo motor.

The hydraulic cylinder 430 has a cylinder body 431, a piston 432, and a piston rod 433. The cylinder body 431 is fixed to the injection unit 300. The piston 432 partitions the inside of the cylinder body 431 into a front chamber 435 serving as a first chamber and a rear chamber 436 serving as a second chamber. The piston rod 433 is fixed to the stationary platen 110.

The front chamber 435 of the hydraulic cylinder 430 is connected to the first port 411 of the hydraulic pump 410 via a first flow path 401. The hydraulic fluid discharged from the first port 411 is supplied to the front chamber 435 via the first flow path 401. In this manner, the injection unit 300 is pressed forward. The injection unit 300 is advanced, and the nozzle 320 is pressed against the stationary mold 810. The front chamber 435 functions as a pressure chamber that generates the nozzle touch pressure of the nozzle 320 by the pressure of the hydraulic fluid supplied from the hydraulic pump 410.

On the other hand, the rear chamber 436 of the hydraulic cylinder 430 is connected to the second port 412 of the hydraulic pump 410 via a second flow path 402. The hydraulic fluid discharged from the second port 412 is supplied to the rear chamber 436 of the hydraulic cylinder 430 via the second flow path 402. In this manner, the injection unit 300 is pressed rearward. The injection unit 300 is retreated, and the nozzle 320 is separated from the stationary mold 810.

In the present embodiment, the moving unit 400 includes the hydraulic cylinder 430, but the present invention is not limited thereto. For example, instead of the hydraulic cylinder 430, an electric motor and a motion conversion mechanism that converts a rotary motion of the electric motor into a linear motion of the injection unit 300 may be used.

### (Control Unit)

For example, the control unit 700 is configured to include a computer, and has a central processing unit (CPU) 701, a storage medium 702 such as a memory, an input interface 703, and an output interface 704 as illustrated in FIGS. 1 and 2. The control unit 700 performs various types of control by causing the CPU 701 to execute a program stored in the storage medium 702. In addition, the control unit 700 receives a signal from the outside through the input interface 703, and transmits the signal to the outside through the output interface 704.

The control unit 700 repeatedly performs the plasticizing process, the mold closing process, the pressurizing process, the mold clamping process, the filling process, the holding pressure process, the cooling process, the depressurizing process, the mold opening process, and the ejection process, thereby repeatedly manufacturing the molding product. A series of operations for obtaining the molding product, for example, an operation from the start of the plasticizing process to the start of the subsequent plasticizing process will be referred to as a "shot" or a "molding cycle" . In addition, a time required for one shot will be referred to as a "molding cycle time" or a "cycle time".

For example, in one molding cycle, the plasticizing process, the mold closing process, the pressurizing process, the mold clamping process, the filling process, the holding pressure process, the cooling process, the depressurizing process, the mold opening process, and the ejection process are performed in this order. The order described here is the order of the start times of the respective processes. The filling process, the holding pressure process, and the cooling process are performed during the mold clamping process. The start of the mold clamping process may coincide with the start of the filling process. The completion of the depressurizing process coincides with the start of the mold opening process.

A plurality of processes may be performed at the same time in order to shorten the molding cycle time. For example, the plasticizing process may be performed during the cooling process of the previous molding cycle or may be performed during the mold clamping process. In this case, the mold closing process may be performed in an initial stage of the molding cycle. In addition, the filling process may start during the mold closing process. In addition, the ejection process may start during the mold opening process. When an on-off valve for opening and closing the flow path of the nozzle 320 is provided, the mold opening process may start during the plasticizing process. The reason is as follows. Even when the mold opening process starts during the plasticizing process, when the on-off valve closes the flow path of the nozzle 320, the molding material does not leak from the nozzle 320.

One molding cycle may include a process other than the plasticizing process, the mold closing process, the pressurizing process, the mold clamping process, the filling process, the holding pressure process, the cooling process, the depressurizing process, the mold opening process, and the ejection process.

For example, after the holding pressure process is completed and before the plasticizing process starts, a pre-plasticizing suck-back process of retreating the screw 330 to a preset plasticizing start position may be performed. The pressure of the molding material accumulated in front of the screw 330 before the plasticizing process starts can be reduced, and it is possible to prevent the screw 330 from being rapidly retreated when the plasticizing process starts.

In addition, after the plasticizing process is completed and before the filling process starts, a post-plasticizing suck-back process may be performed in which the screw 330 is retreated to a preset filling start position (also referred to as an "injection start position") . The pressure of the molding material accumulated in front of the screw 330 before the filling process starts can be reduced, and can prevent a leakage of the molding material from the nozzle 320 before the filling process starts.

The control unit 700 is connected to an operation unit 750 that receives an input operation of a user, and a display unit 760 that displays a screen. For example, the operation unit 750 and the display unit 760 may be configured to include a touch panel 770, and may be integrated with each other. The touch panel 770 serving as the display unit 760 displays the screen under the control of the control unit 700. For example, the screen of the touch panel 770 may display settings of the injection molding machine 10, and information on a current state of the injection molding machine 10. In addition, for example, the screen of the touch panel 770 may display a button for receiving the input operation of the user or an operation unit such as an input field. The touch panel 770 serving as the operation unit 750 detects an input operation of the user on the screen, and outputs a signal corresponding to the input operation to the control unit 700. In this manner, for example, while confirming information displayed on the screen, the user can perform settings (including an input of a set value) of the injection molding machine 10 by operating the operation unit provided on the screen. In addition, the user can operate the injection molding machine 10 corresponding to the operation unit by operating the operation unit provided on the screen. For example, the operation of the injection molding machine 10 may be the operation (including stopping) of the mold clamping unit 100, the ejector unit 200, the injection unit 300, and the moving unit 400. In addition, the operation of the injection molding machine 10 may be switching between the screens displayed on the touch panel 770 serving as the display unit 760.

A case has been described in which the operation unit 750 and the display unit 760 of the present embodiment are integrated with each other as the touch panel 770. However, both of these may be independently provided. In addition, a plurality of the operation units 750 may be provided. The operation unit 750 and the display unit 760 are disposed on the operation side (negative direction of the Y-axis) of the mold clamping unit 100 (more specifically, the stationary platen 110).

### (Mold Clamping Compression)

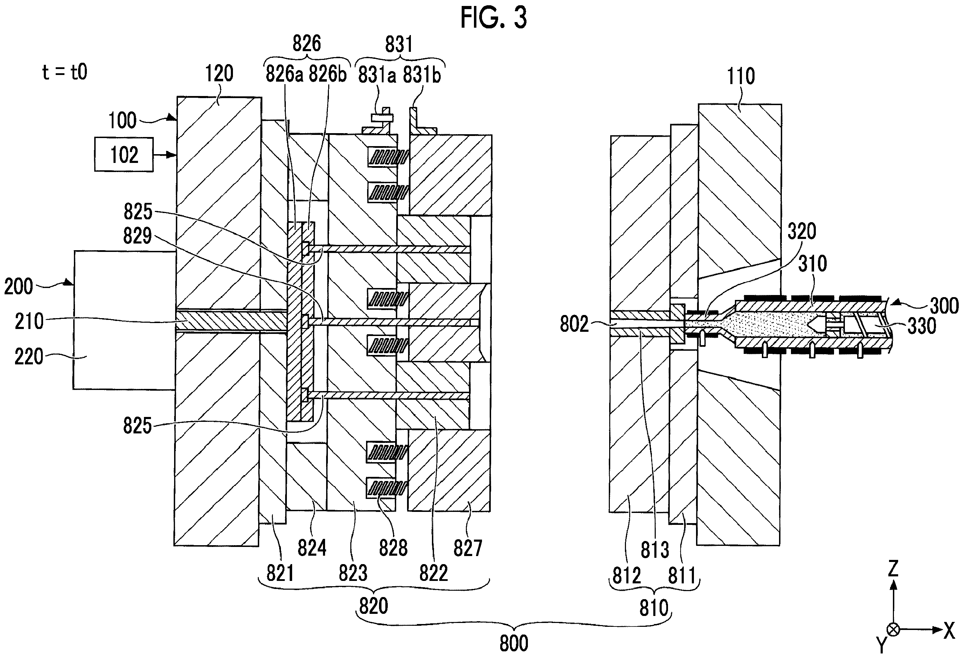

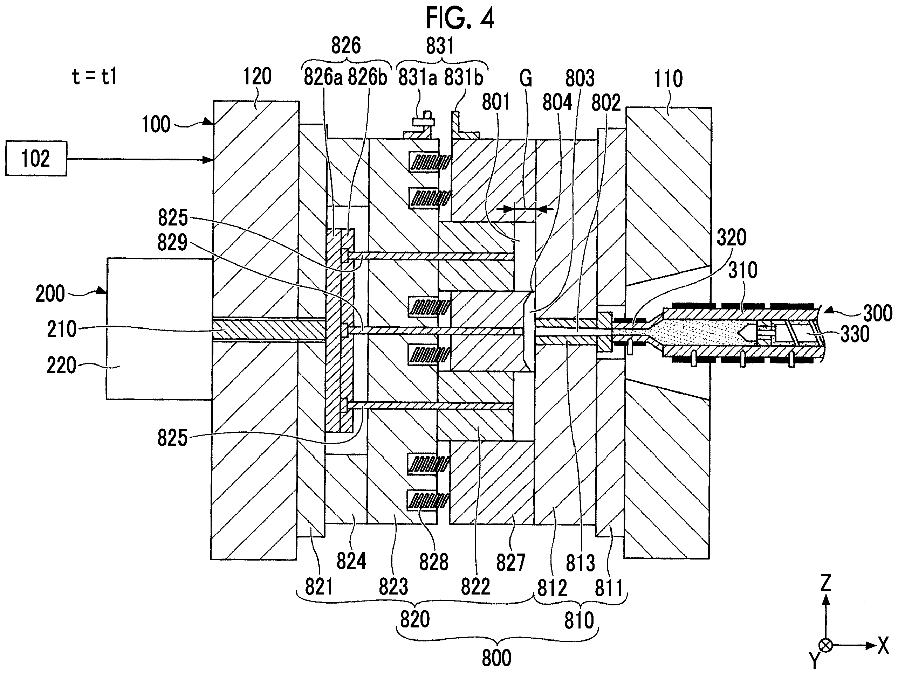

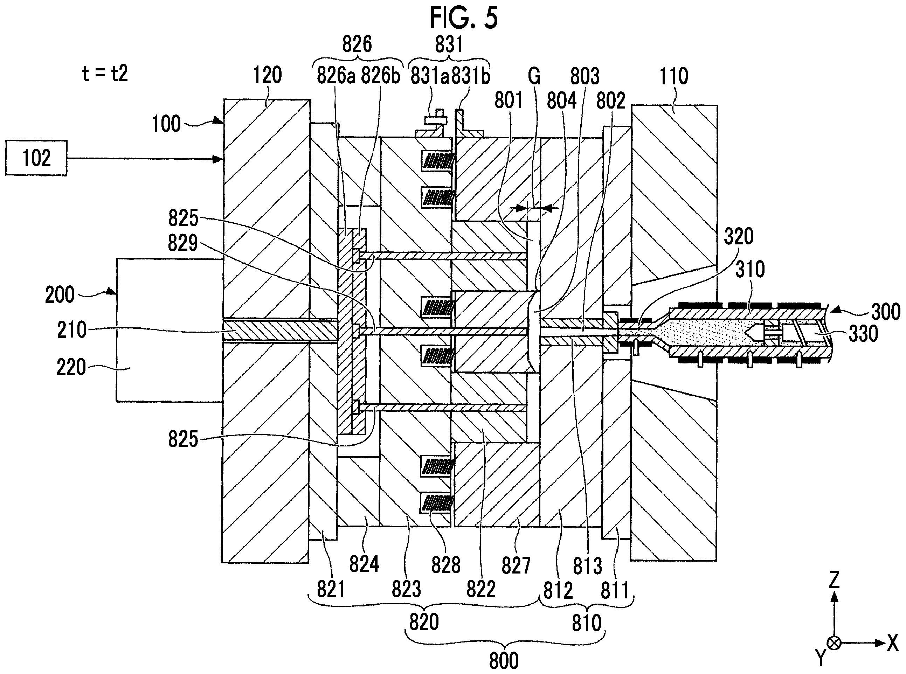

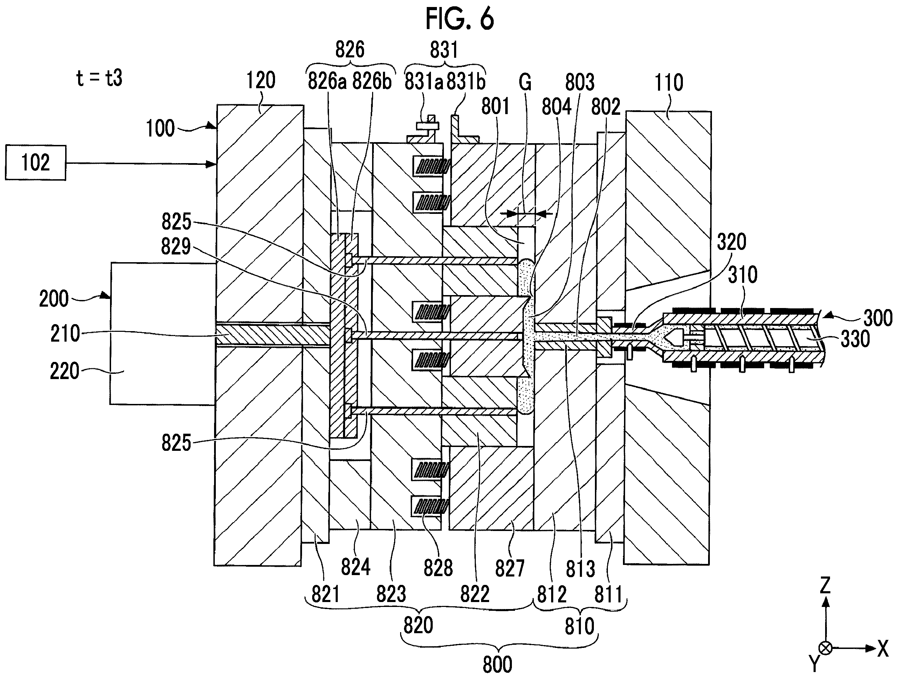

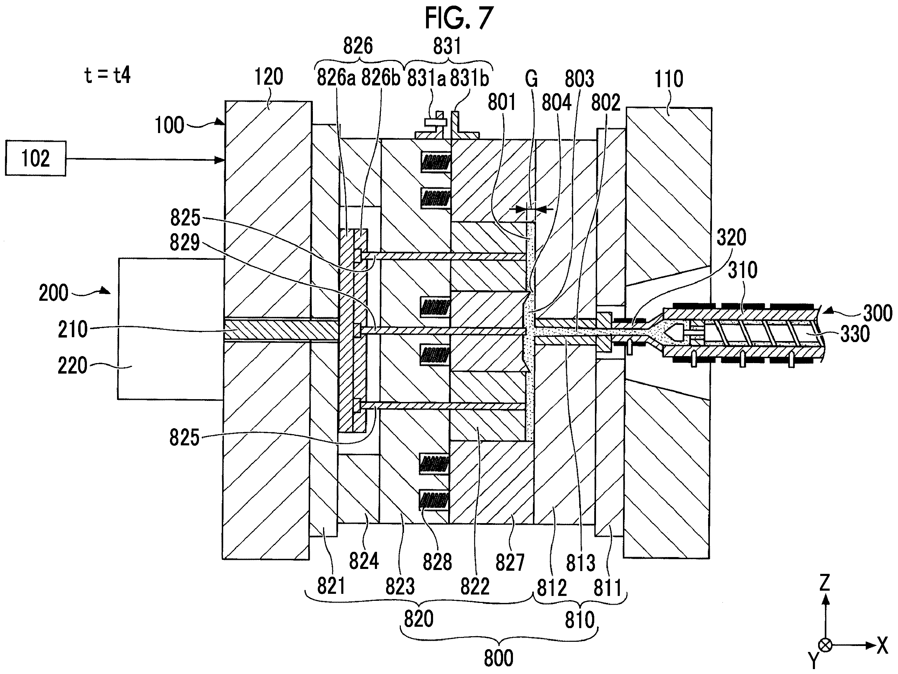

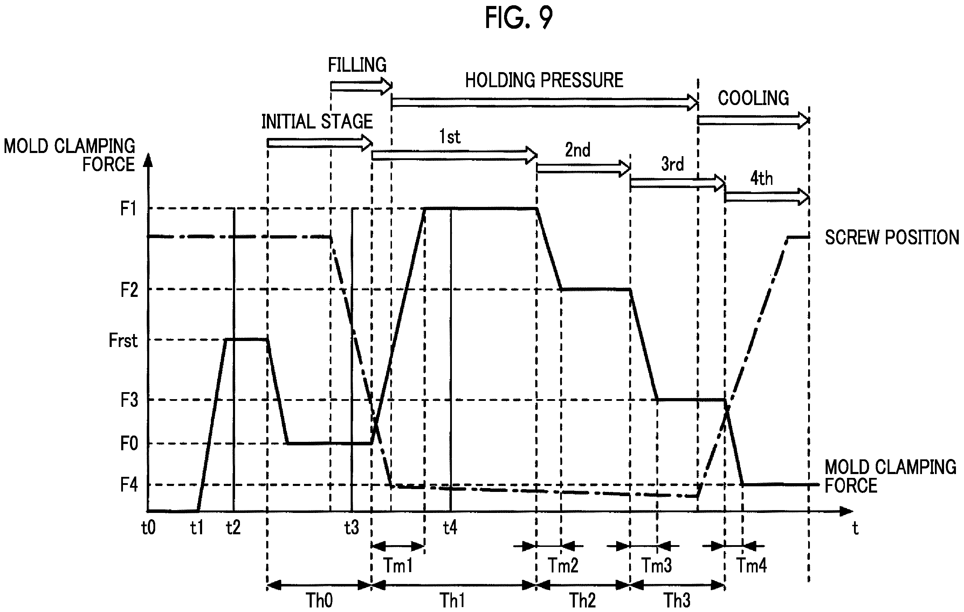

The moving mechanism 102 of the mold clamping unit 100 advances the movable platen 120 as illustrated in FIGS. 3 to 7 under the control unit 700, and compresses the molding material filled in the cavity space 801. Compressing the molding material by the operation of the mold clamping unit 100 is referred to as "mold clamping compression". The mold clamping compression is performed under the control of the control unit 700. FIG. 3 is a view illustrating an example of the operation of the mold clamping unit, and is a view illustrating the mold unit at time t0 in FIG. 9. FIG. 4 is a view illustrating an example of the operation of the mold clamping unit subsequent to FIG. 3, and is a view illustrating the mold unit at time t1 in FIG. 9. FIG. 5 is a view illustrating an example of the operation of the mold clamping unit subsequent to FIG. 4, and is a view illustrating the mold unit at time t2 in FIG. 9. FIG. 6 is a view illustrating an example of the operation of the mold clamping unit subsequent to FIG. 5, and is a view illustrating the mold unit at time t3 in FIG. 9. FIG. 7 is a view illustrating an example of the operation of the mold unit following FIG. 6, and is a view illustrating the mold unit at time t4 in FIG. 9.

The mold unit 800 includes a stationary mold 810 and a movable mold 820. For example, the stationary mold 810 has a stationary attachment plate 811 attached to the stationary platen 110, a stationary mold plate 812 forming the cavity space 801 during the mold clamping, and a sprue bush 813 against which the nozzle 320 of the injection unit 300 is pressed. The sprue bush 813 includes a bush inserted into a through-hole of the stationary mold plate 812 and a flange inserted into a through-hole of the stationary attachment plate 811. A sprue 802 is formed to penetrate the sprue bush 813. The sprue 802 is a flow path for the molding material. The nozzle 320 of the injection unit 300 is pressed against the sprue bush 813 to inject the molding material into the sprue 802.

The movable mold 820 has a movable attachment plate 821 attached to the movable platen 120, a movable mold plate 822 forming the cavity space 801 during the mold clamping, a movable receiving plate 823 that supports the movable mold plate 822 from behind, and a spacer block 824 disposed between the movable receiving plate 823 and the movable attachment plate 821. The spacer block 824 forms a space in which the ejector plate 826 moves in the mold opening and closing direction. From the rear side to the front side, the movable attachment plate 821, the spacer block 824, the movable receiving plate 823, and the movable mold plate 822 are laminated in this order.

The movable mold 820 has an ejector pin 825 for ejecting the molding product and an ejector plate 826 to which the ejector pin 825 is attached. The ejector pin 825 is inserted into a through-hole penetrating the movable mold plate 822 and the movable receiving plate 823. The ejector plate 826 includes two plates 826a and 826b that pinch and hold a flange of the ejector pin 825.

The movable mold 820 further includes a movable core 827 guided in the mold opening and closing direction by the movable mold plate 822, and a spring 828 that biases the movable core 827 in the mold closing direction. Instead of the spring 828, a cylinder (not illustrated) that moves the movable core 827 in the mold opening and closing direction may be provided. The movable core 827 comes into contact with the stationary mold plate 812 during the mold clamping.

As illustrated in FIG. 5, the movable core 827 forms a runner 803 during the mold clamping. The runner 803 is a flow path of the molding material subsequent to the sprue 802, and is connected to the cavity space 801 via a gate 804. The molding material passes through the sprue 802, the runner 803, and the gate 804, and fills the cavity space 801.

The movable mold 820 has a core pin 829 that ejects an unnecessary product solidified by the runner 803. The core pin 829 is inserted into a through-hole penetrating the movable core 827 and the movable receiving plate 823. As in the ejector pin 825, the core pin 829 is attached to the ejector plate 826, and is advanced and retreated together with ejector plate 826.

The mold unit 800 includes a gap detector 831 that detects a gap G between the movable mold plate 822 and the stationary mold plate 812 during the mold clamping. For example, the gap detector 831 includes a displacement sensor 831a attached to the movable receiving plate 823 and a target 831b attached to the movable core 827.

The displacement sensor 831a detects the gap G (refer to FIGS. 4 to 7) between the movable mold plate 822 and the stationary mold plate 812 by detecting the displacement of the target 831b and the movable core 827. The target 831b may be attached to the stationary mold plate 812 instead of the movable core 827. In addition, the displacement sensor 831a and the target 831b may be reversely disposed.

As illustrated in FIGS. 3 to 7, the moving mechanism 102 of the mold clamping unit 100 advances the movable platen 120 under the control of the control unit 700, and compresses the molding material filled in the cavity space 801. First, as illustrated in FIG. 3, when the mold closing process starts, the movable mold 820 and the stationary mold 810 are separated from each other. Next, when the moving mechanism 102 advances the movable platen 120, as illustrated in FIG. 4, the movable core 827 comes into contact with the stationary mold plate 812, and the mold closing process is completed.

Next, when the moving mechanism 102 advances the movable platen 120, the spring 828 contracts as illustrated in FIG. 5. An elastic restoring force of the spring 828 and the mold clamping force are balanced. When the mold clamping force reaches preset Frst (refer to FIG. 9), the advance of the movable platen 120 is stopped, and the pressurizing process is completed. When the pressurizing process is completed, the gap G detected by the gap detector 831 is reset to zero. A fact that the gap G is negative means that the gap G is narrowed, and a fact that the gap G is positive means that the gap G is widened.

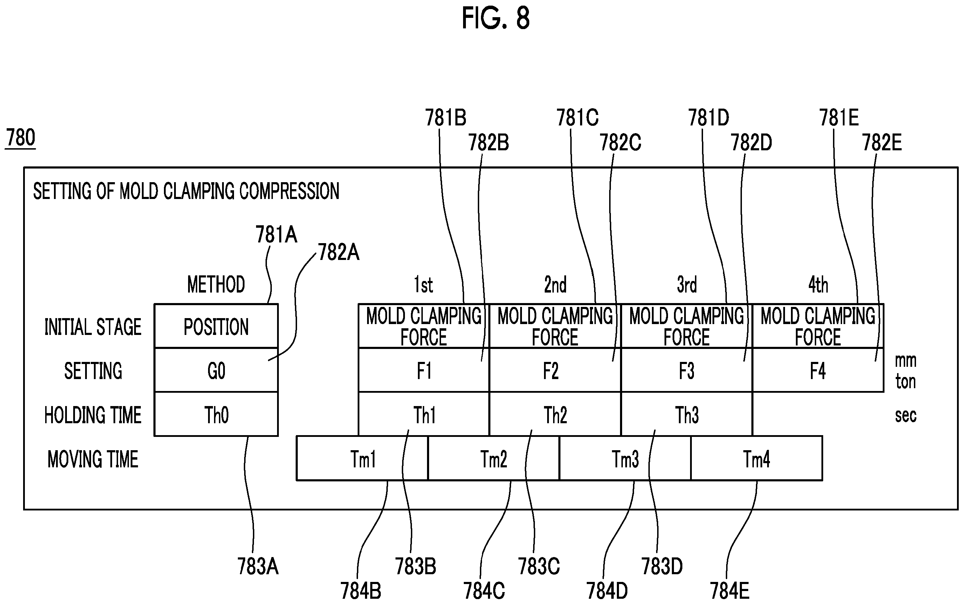

Next, the moving mechanism 102 retreats or advances the movable platen 120 until the gap G reaches preset G0 (refer to FIG. 8) or until the mold clamping force reaches preset F0 (refer to FIG. 9) . G0 and F0 have a one-to-one correspondence. As G0 decreases, F0 increases.

Next, in a state where the gap G is G0 or the mold clamping force is F0, as illustrated in FIG. 6, the nozzle 320 of the injection unit 300 injects the molding material into the mold unit 800. The molding material passes through the sprue 802, the runner 803, and the gate 804, and fills the cavity space 801.

Next, as illustrated in FIG. 7, the moving mechanism 102 advances the movable platen 120 to compress the molding material filled in the cavity space 801. Since the molding material is compressed, the molding material can be spread to the whole cavity space 801. Therefore, a thin molding product can be accurately molded. In addition, the filling of the molding material starts in a state where the gap G is widened. Accordingly, a filling pressure can be reduced.

The molding material filled in the cavity space 801 is compressed, and thereafter, is cooled and solidified. As a result, a molding product is obtained. After the mold opening, the molding product is ejected from the movable mold 820 by the ejector pin 825. Specifically, the ejector rod 210 is advanced to push the ejector plate 826. As a result, the ejector pin 825 is advanced to eject the molding product. In this case, the core pin 829 is also advanced to eject an unnecessary product. Thereafter, the ejector rod 210 is retreated to an original position.

FIG. 8 is a view illustrating an example of a setting screen of the mold clamping compression. A setting screen 780 illustrated in FIG. 8 is displayed by the display unit 760. In each stage of the mold clamping compression, the setting screen 780 includes input fields 781A to 781E, 782A to 782E, 783A to 783D, and 784B to 784E for inputting the setting of the mold clamping compression. In FIG. 8, as a stage of the mold clamping compression, an initial stage, a first stage, a second stage, a third stage, and a fourth stage are prepared.

A control method for each stage is input to the input fields 781A to 781E. As the control method, either the position or the mold clamping force is selected. When the position is selected as the control method, feedback-control of the moving mechanism 102 of the mold clamping unit 100 is performed so that a detection value of the gap G is a set value. On the other hand, when the mold clamping force is selected as the control method, feedback-control of the moving mechanism 102 of the mold clamping unit 100 is performed so that a detection value of the mold clamping force is a set value. In FIG. 8, the position is input as the control method for the initial stage, and the mold clamping force is input as the control method for the first stage to the fourth stage.

A set value of a physical quantity selected as the control method is input to the input fields 782A to 782E. When the position is selected as the control method, the set value of the gap G is input. On the other hand, when the mold clamping force is selected as the control method, the set value of the mold clamping force is input. In FIG. 8, G0 is input as the set value of the position in the initial stage, F1 is input as the set value of the mold clamping force for the first stage, F2 is input as the set value of the mold clamping force for the second stage, F3 is input as the set value of the mold clamping force for the third stage, and F4 is input as the set value of the mold clamping force for the fourth stage.

A time length of each stage is input to the input fields 783A to 783D. In FIG. 8, Th0 is input as the time length of the initial stage, Th1 is input as the time length of the first stage, Th2 is input as the time length of the second stage, and Th3 is input as the time length of the third stage. The time length of the fourth stage is not input since the time length is automatically determined by the time length of the cooling process.

In each stage excluding the initial stage, the time length for changing the set value of the physical quantity selected as the control method from a value when the previous stage is completed to a value input to the input fields 782B to 782E is input to the input fields 784B to 784E. In FIG. 8, Tm1 is input as the time length for changing the set value of the mold clamping force from F0 to F1 in the first stage, Tm2 is input as the time length for changing the set value of the mold clamping from F1 to F2 in the second stage, Tm3 is input as the time length for changing the set value of the mold clamping force from F2 to F3 in the third stage, and Tm4 is input as the time length for changing the set value of the mold clamping force from F3 to F4 in the fourth stage.

FIG. 9 is a view illustrating an example of a transition of the mold clamping force controlled in accordance with the setting screen of FIG. 8. FIG. 9 illustrates a transition of the screw position in addition to the transition of the mold clamping force. In the filling process, the screw 330 is advanced from the filling start position to the V/P switching position, and the value of the screw position decreases. In the holding pressure process, the screw 330 is advanced or retreated (advanced in FIG. 9) so that the pressure of the molding material reaches the set value. In the cooling process, the plasticizing process is performed, and the screw 330 is retreated to the plasticizing completion position. The plasticizing completion position and the filling start position may be the same position.

At time t0 illustrated in FIG. 9, the moving mechanism 102 of the mold clamping unit 100 starts advancing the movable platen 120, and starts the mold closing process. Thereafter, the mold closing process is completed at time t1. Subsequently, the pressurizing process starts, and the moving mechanism 102 advances the movable platen 120 until the mold clamping force reaches the preset Frst. When the mold clamping force reaches Frst, the pressurizing process is completed, and the gap G detected by the gap detector 831 is reset to zero.

Next, the initial stage of the mold clamping compression starts, and the moving mechanism 102 retreats or advances the movable platen 120 (retreated in FIG. 9) until the gap G reaches the preset G0. The gap G and the mold clamping force have a one-to-one correspondence, and when the gap G reaches G0, the mold clamping force reaches F0. When a preset time elapses from a time at which the gap G reaches G0 and the gap G is stable, the filling process starts. The filling process starts in the middle of the initial stage.

When the elapsed time from the start of the initial stage reaches Th0, the first stage starts, and the set value of the mold clamping force is changed continuously or in stages from F0 to F1. A time required for the change is Tm1. A time for holding the set value of the mold clamping force to be F1 is equal to a difference between Th1 (Th1>Tm1) and Tm1.

When the elapsed time from the start of the first stage reaches Th1, the second stage starts, and the set value of the mold clamping force is changed continuously or in stages from F1 to F2. A time required for the change is Tm2. A time for holding the set value of the mold clamping force to be F2 is equal to a difference between Th2 (Th2>Tm2) and Tm2.

When the elapsed time from the start of the second stage reaches Th2, the third stage starts, and the set value of the mold clamping force is changed continuously or in stages from F2 to F3. A time required for the change is Tm3. A time for holding the set value of the mold clamping force to be F3 is equal to a difference between Th3 (Th3>Tm3) and Tm3.

When the elapsed time from the start of the third stage reaches Th3, the fourth stage starts, and the set value of the mold clamping force is changed continuously or in stages from F3 to F4. A time required for the change is Tm4. Thereafter, when the cooling process is completed, the depressurizing process starts, and thereafter, the mold opening process is performed.

### (Acquisition Timing of Actual Value of Mold Clamping Force)

In some cases, the mold space of the mold unit 800 may be changed due to a temperature change in the mold unit 800. The temperature of the mold unit 800 tends to rise with the lapse of time. Accordingly, the mold space of the mold unit 800 tends to increase with the lapse of time. However, in some cases, the mold space of the mold unit 800 may decrease. When the mold space of the mold unit 800 is changed, the actual value of the mold clamping force is changed. The actual value of the mold clamping force is detected by the mold clamping force detector such as the tie bar strain detector 141.

Therefore, the moving mechanism 102 of the injection molding machine 10 has the mold space adjustment mechanism 180 that adjusts the interval L between the stationary platen 110 and the toggle support 130. For example, the mold space adjustment mechanism 180 includes the screw shaft 181 formed in the tie bar 140, the screw nut 182 attached to the toggle support 130 to be rotatable, and the mold space adjustment motor 183 that rotates the screw nut 182 screwed to the screw shaft 181. The mold space adjustment mechanism 180 performs the mold space adjustment by adjusting the position of the toggle support 130.

The control unit 700 controls the moving mechanism 102, based on the actual value of the mold clamping force detected at a predetermined acquisition timing during a molding cycle. The detection value detected at the acquisition timing is the actual value of the mold clamping force used for controlling the moving mechanism 102. The moving mechanism 102 is controlled, based on the actual value of the mold clamping force, and for example, the mold space adjustment is performed. The actual value of the mold clamping force is used for the mold space adjustment. When a deviation between the actual value of the mold clamping force and a set value falls out of an allowable range, the mold space adjustment is performed. On the other hand, when the deviation falls within the allowable range, the mold space adjustment is not performed.

In the related art, the acquisition timing for acquiring the actual value of the mold clamping force is stored in advance in the storage medium 702 of the control unit 700, and cannot be changed. Therefore, user convenience is unfavorable. For example, when the actual value of the mold clamping force fluctuates during a mold clamping process, restrictions such as prohibiting the mold space adjustment are imposed, and thus, the user convenience is unfavorable. A reason for prohibiting the mold space adjustment is as follows. When the actual value of the mold clamping force fluctuates during the mold clamping process, if the acquisition timing of the actual value of the mold clamping force is unfavorable, an error of the actual value of the mold clamping force may increase.

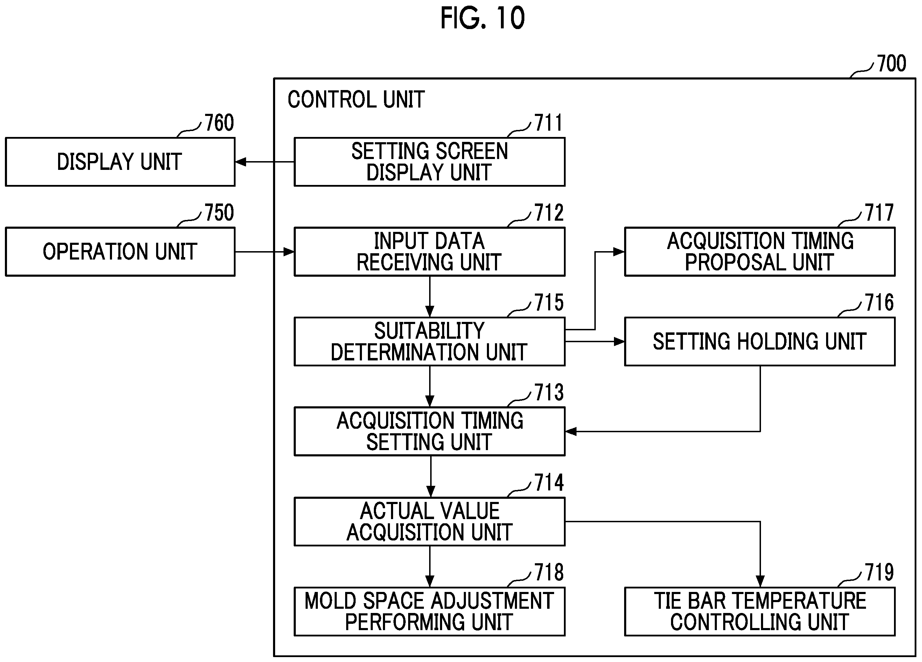

Therefore, the control unit 700 of the present embodiment has various functions in order to improve the user convenience. FIG. 10 is a functional block view illustrating an example of components of the control unit 700. Each functional block illustrated in FIG. 10 is conceptual, and may not necessarily be configured to be physical as illustrated. All or a portion of each functional block can be configured to be functionally or physically distributed and integrated in any desired unit. All or any desired portion of each processing function performed in each functional block may be realized by a program executed by a CPU, or may be realized as hardware by a wired logic.

As illustrated in FIG. 10, for example, the control unit 700 has a setting screen display unit 711 that displays a setting screen to which the acquisition timing of the actual value of the mold clamping force is input on the display unit 760, an input data receiving unit 712 that receives data input to the setting screen, an acquisition timing setting unit 713 that sets the acquisition timing in accordance with the received data, and an actual value acquisition unit 714 that acquires the actual value of the mold clamping force detected by the set acquisition timing. The acquisition timing of the actual value of the mold clamping force can be changed on the setting screen. Accordingly, the user convenience of the injection molding machine can be improved.

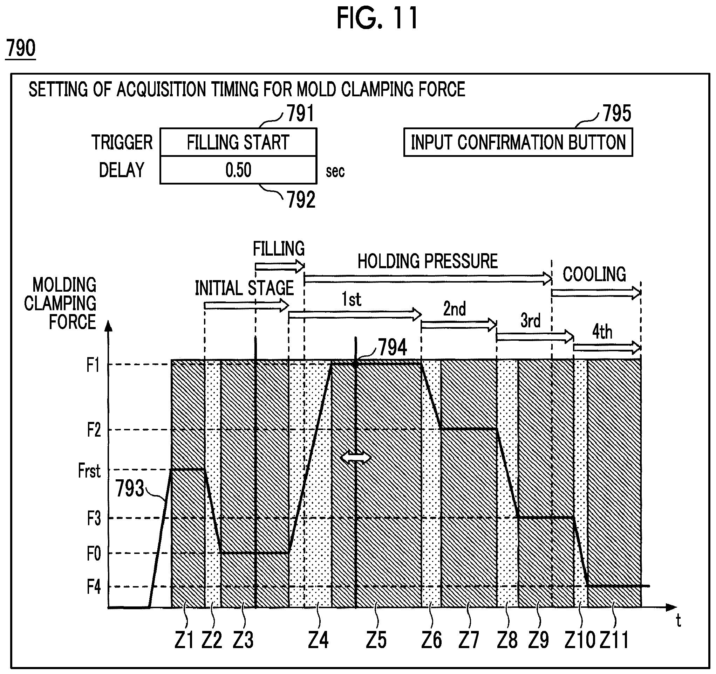

FIG. 11 is a view illustrating an example of the setting screen to which the acquisition timing of the actual value of the mold clamping force is input. For example, the setting screen 790 includes a first input field 791 to which a reference timing is input, a second input field 792 to which a delay time from the reference timing to the acquisition timing is input. The acquisition timing can be specified by inputting the reference timing and the delay time. Instead of the delay time, an advance time may be input to the second input field 792.

A plurality of options are prepared in advance as the reference timing, and one option from the plurality of options is input to the first input field 791. The options are not particularly limited. However, for example, as the options, the start of the filling process, the start of the holding pressure process, the completion of the holding pressure process, the start of the first stage of the mold clamping compression, the completion of the pressurizing process, and the start of the mold closing process are prepared. In FIG. 11, as the reference timing, "filling start" which is the start of the filling process is input. The acquisition timing is not limited to the mold clamping process, and may be any timing during one molding cycle . For example, any timing during the mold closing process, the pressurizing process, the depressurizing process, or the mold opening process may be adopted.

In addition, the setting screen 790 may include waveform data 793 indicating the transition of the mold clamping force, and a pointer 794 used to input the acquisition timing onto the waveform data 793. The waveform data 793 may be the actual value or the set value. The pointer 794 is movable along a time axis of the waveform data 793, and the acquisition timing is designated at a stop position of the pointer 794.

The user moves the pointer 794 by using the operation unit 750, and inputs the acquisition timing. Data indicating the acquisition timing designated by the pointer 794 may be automatically input to the first input field 791 and the second input field 792. The user can input the acquisition timing while looking at the waveform data 793.

The setting screen 790 may include the first input field 791 and the second input field 792, and may not include the waveform data 793 and the pointer 794. In addition, the setting screen 790 may include the waveform data 793 and the pointer 794, and may not include the first input field 791 and the second input field 792. In any case, the acquisition timing of the actual value of the mold clamping force can be changed on the setting screen. Accordingly, the user convenience of the injection molding machine can be improved.

The setting screen 790 may further include an input confirmation button 795 that confirms the input data. When the input confirmation button 795 is operated, the data input to the setting screen 790 is transmitted to the input data receiving unit 712. The input confirmation button 795 may not be provided. In this case, the data is automatically transmitted to the input data receiving unit 712 when the data is input.

The control unit 700 may further include a suitability determination unit 715 that determines whether or not the acquisition timing input to the setting screen 790 is suitable. For example, the suitability determination unit 715 determines that the acquisition timing is suitable, when the acquisition timing falls within time zones Z1, Z3, Z5, Z7, Z9, and Z11 where the mold clamping force is stable.

Whether or not the mold clamping force is stable is determined by (A) whether or not the amount of a change in the actual value of the mold clamping force per unit time is equal to or smaller than a threshold, and (B) whether or not the amount of a change in the actual value of the mold clamping force between shots is equal to or smaller than a threshold, or (C) whether or not a deviation between the actual value and the set value of the mold clamping force is equal to or smaller than a threshold.
A plurality of determination references selected from (A) to (C) may be used.

The suitability determination unit 715 determines whether or not the acquisition timing input to the setting screen 790 is suitable. Accordingly, the actual value of the mold clamping force can be acquired in the time zones Z1, Z3, Z5, Z7, Z9, and Z11 in which the mold clamping force is stable, and an error of the actual value of the mold clamping force can be reduced.

The control unit 700 may further have a setting suspending unit 716 that causes the acquisition timing setting unit 713 to suspend the setting of the acquisition timing until the suitability determination unit 715 determines that the acquisition timing is suitable. The acquisition timing setting unit 713 sets the acquisition timing, when the suitability determination unit 715 determines that the acquisition timing is suitable.

The setting suspending unit 716 suspends the setting of the acquisition timing. Accordingly, the user can be provided with an opportunity to correct the acquisition timing, and the actual value of the mold clamping force can be acquired at a suitable acquisition timing.

The control unit 700 may further have an acquisition timing proposal unit 717 that controls the display unit 760 to display a suitable candidate for the acquisition timing on the setting screen 790. When the acquisition timing input by the user falls within the time zones Z2, Z4, Z6, Z8, and Z10 in which the mold clamping force is not stable, the acquisition timing proposal unit 717 displays the suitable candidate for the acquisition timing on the setting screen 790.

For example, the acquisition timing proposal unit 717 displays the suitable candidate for the acquisition timing in the first input field 791 and the second input field 792, or displays the suitable candidate for the acquisition timing on the waveform data 793 by using the pointer 794. The candidate displayed by the acquisition timing proposal unit 717 and the data input by the user may be displayed on the setting screen 790 at the same time.

As the suitable candidate for the acquisition timing, a time zone that is closest to the acquisition timing input by the user and has the stable mold clamping force is used. Alternatively, as the suitable candidate for the acquisition timing, regardless of the acquisition timing input by the user, a time zone having the strongest mold clamping force may be used out of the time zones in which the mold clamping force is stable.

As the candidate for the acquisition timing, the acquisition timing proposal unit 717 may display a plurality of the time zones in which the mold clamping force is stable on the setting screen so that the user can select the acquisition timing from the plurality of candidates. In this case, the acquisition timing setting unit 713 sets the time zone selected by the user, as the acquisition timing.

The acquisition timing proposal unit 717 displays the suitable candidate for the acquisition timing on the setting screen 790. Accordingly, a correction policy of the acquisition timing can be proposed to the user, and the user convenience can be further improved.

The control unit 700 may have a mold space adjustment performing unit 718 that performs the mold space adjustment by using the actual value of the mold clamping force acquired by the actual value acquisition unit 714. When the mold clamping compression is performed, for example, the interval L between the stationary platen 110 and the toggle support 130 is adjusted so that a link angle θ of the toggle mechanism 150 becomes a predetermined angle at a timing when the mold clamping force is strongest. In this case, in order to adjust the link angle θ to the predetermined angle at the timing when the mold clamping force is strongest, it is preferable to acquire the actual value of the mold clamping force at the timing when the mold clamping force is strongest.

The control unit 700 may have a mold space adjustment tie bar temperature controlling unit 719 that controls the temperature of the tie bar 140 by using the actual value of the mold clamping force acquired by the actual value acquisition unit 714. When the mold clamping compression is performed, for example, the temperature of the tie bar 140 is controlled so that the distribution of the contact pressure generated on the split surface of the stationary mold 810 and the movable mold 820 is adjusted to a desired distribution at the timing when the mold clamping force is strongest. In this case, in order to adjust the distribution of the contact pressure to the desired distribution at the timing when the mold clamping force is strongest, it is preferable to acquire the actual value of the mold clamping force at the timing when the mold clamping force is strongest.

The actual value of the mold clamping force is used for various applications. Therefore, the setting screen 790 may be prepared for each application.

The setting screen 790 may not be provided. In this case, the acquisition timing setting unit 713 may automatically set the acquisition timing. For example, the acquisition timing setting unit 713 sets the acquisition timing during the time zone in which the mold clamping force is stable. Preferably, the acquisition timing setting unit 713 sets the acquisition timing during the timing zone having the strongest mold clamping force, out of the time zones in which the mold clamping force is stable. Whether or not the mold clamping force is stable can be determined, based on the setting conditions in the mold closing process, the pressurizing process, and the mold clamping process. For example, it can be determined, based on the movement speed or the position of the crosshead 151, or the setting of the mold clamping force. For example, the acquisition timing setting unit 713 acquires data indicating a transition of the mold clamping force, selects the time zone in which the mold clamping force is stable, based on the acquired data, and sets the selected time zone, as the acquisition timing. The data indicating the transition of the mold clamping force may be the actual value or the set value.

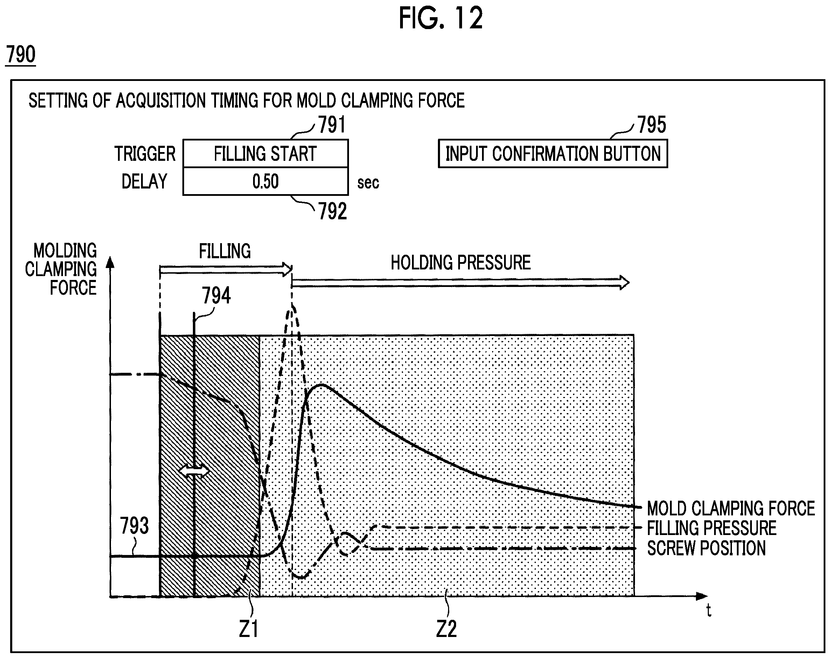

In the present embodiment, a case has been described where the mold clamping compression is performed. However, the present invention is also applicable to a case where that mold clamping compression is not performed, that is, a case where the position or the mold clamping force of the movable platen 120 is controlled to be constant from the start to the completion of the mold clamping process. Hereinafter, a case where the position of the movable platen 120 is controlled to be constant from the start to the completion of the mold clamping process will be described with reference to FIG. 12.

FIG. 12 is a view illustrating another example of the setting screen to which the acquisition timing of the actual value of the mold clamping force is input. In addition to the transition of the actual value of the mold clamping force, FIG. 12 illustrates the transition of the actual value of the screw position, and the transition of the actual value of the filling pressure of the molding material. In the filling process, the screw 330 is advanced from the filling start position to the V/P switching position, and the filling pressure increases.

When the mold clamping force is weak and the contact pressure generated on the split surface of the stationary mold 810 and the movable mold 820 is low during the mold clamping, in some cases, the stationary mold 810 and the movable mold 820 may be opened due to an increase in the filling pressure. The tie bar 140 is extended by the opened amount, and the mold clamping force detected by the tie bar strain detector 141 may be stronger in some cases.

The stationary mold 810 and the movable mold 820 are opened due to the increase in the filling pressure. Accordingly, gas inside the cavity space 801 can be released outward by the mold clamping force. As a result, the cavity space 801 is easily filled with the molding material. In addition, adiabatic compression of the gas can be suppressed, and heat generation can be suppressed. Therefore, carbonization of the molding material can be suppressed.

As described above, even when the position of the movable platen 120 is controlled to be constant from the start to the completion of the mold clamping process, in some cases, the actual value of the mold clamping force may fluctuate due to the fluctuation of the filling pressure of the molding material.

Therefore, as in the setting screen 790 illustrated in FIG. 11, the setting screen 790 illustrated in FIG. 12 includes the first input field 791, the second input field 792, the waveform data 793, the pointer 794, and the input confirmation button 795. Therefore, the acquisition timing of the actual value of the mold clamping force can be changed on the setting screen 790.

When the actual value of the mold clamping force is used for the mold space adjustment or the temperature control of the tie bar, that is, when the actual value of the mold clamping force detected at the acquisition timing is used for controlling the moving mechanism 102, it is preferable to select the time zone Z1 in which the mold clamping force is stable, as the acquisition timing for the actual value of the mold clamping force. However, the actual value of the mold clamping force is used in various applications. In some cases, depending on the application, it may be preferable to select the time zone Z2 in which the mold clamping force is not stable, as the acquisition timing.

For example, not only the actual value of the mold clamping force detected at the acquisition timing can be used for controlling the moving mechanism, but also the actual value of the mold clamping force can be used for quality control of the molding product. When the actual value of the mold clamping force is used for the quality control of the molding product, it is preferable that the acquisition timing of the actual value of the mold clamping force falls within the time zone Z2 in which the actual mold clamping force is not stable. The reason is as follows. A difference in the filling pressure between shots is likely to appear in the actual value of the mold clamping force, a difference in the quality of the molding product between shots is likely to appear in the actual value of the mold clamping force.

Hitherto, the embodiments of the injection molding machine according to the present invention have been described. However, the present invention is not limited to the above-described embodiments. Various modifications, corrections, substitutions, additions, deletions, and combinations can be made within the scope of the appended claims.

The control unit 700 may record and/or display the actual value of the mold clamping force detected at the acquisition timing. The control unit 700 stores the actual value of the mold clamping force detected at the acquisition timing in the storage medium 702. In addition, the control unit 700 displays the actual value of the mold clamping force detected at the acquisition timing on the display unit 760.

### Brief Description of the Reference Symbols

10: injection molding machine
102: moving mechanism
110: stationary platen
120: movable platen
141: tie bar strain detector (mold clamping force detector)
700: control unit
760: display unit

## Claims

1. An injection molding machine (10) comprising:
a moving mechanism (102) configured to move a movable platen (120) in a mold opening and closing direction with respect to a stationary platen (110);
a mold clamping force detector (141) configured to detect an actual value of a mold clamping force;
a control unit (700) configured to control the moving mechanism (102), based on the actual value of the mold clamping force detected at a predetermined acquisition timing during a molding cycle; and
a display unit (760) configured to display a setting screen (790) to which the acquisition timing is input,
**characterized in that** the control unit (700) is configured to acquire the actual value of the mold clamping force detected at the acquisition timing input to the setting screen (790), and
the acquisition timing of the actual value of the mold clamping force is changed to assume a value lying between a mold closing process and a mold opening process, based on the acquisition timing input to the setting screen (790).

2. The injection molding machine (10) according to claim 1,
wherein the setting screen (790) includes a first input field (791) to which a reference timing is input, and a second input field (792) to which a delay time or an advance time from the reference timing to the acquisition timing is input, and
the control unit (700) is configured to acquire the actual value of the mold clamping force detected at the acquisition timing input to the first input field (791) and the second input field (792).

3. The injection molding machine (10) according to claim 1 or 2,
wherein the setting screen (790) includes waveform data (793) indicating a transition of the mold clamping force, and a pointer (794) used to input the acquisition timing onto the waveform data, and
the control unit (700) is configured to acquire the actual value of the mold clamping force detected at the acquisition timing designated at a stop position of the pointer (794).

4. The injection molding machine (10) according to any one of claims 1 to 3,
wherein the control unit (700) is configured to determine whether or not the acquisition timing input to the setting screen (790) is suitable.

5. The injection molding machine (10) according to claim 4,
wherein the control unit (700) is configured to suspend setting of the acquisition timing until it is determined that the acquisition timing input to the setting screen (790) is suitable.

6. The injection molding machine (10) according to claim 4 or 5,
wherein the control unit (700) is configured to control the display unit (760) to display a suitable candidate for the acquisition timing on the setting screen (790).

7. The injection molding machine (10) according to any one of claims 4 to 6,
wherein the control unit (700) is configured to determine that the acquisition timing is suitable when the acquisition timing falls within a time zone in which the mold clamping force is stable.

8. An injection molding machine (10) comprising:
a moving mechanism (102) configured to move a movable platen (120) in a mold opening and closing direction with respect to a stationary platen (110);
a mold clamping force detector (141) configured to detect an actual value of a mold clamping force; and
a control unit (700) configured to control the moving mechanism (102), based on the actual value of the mold clamping force detected at a predetermined acquisition timing during a molding cycle,
**characterized in that** the control unit (700) is configured to set the acquisition timing, and acquire the actual value of the mold clamping force detected at the set acquisition timing, and
the acquisition timing of the actual value of the mold clamping force is changed to assume a value lying between a mold closing process and a mold opening process.

9. The injection molding machine (10) according to any one of claims 1 to 8,
wherein the moving mechanism (102) includes
a toggle support (130) disposed at an interval from the stationary platen (110),
a tie bar (140) configured to connect the stationary platen (110) and the toggle support (130) to each other,
a toggle mechanism (150) configured to move the movable platen (120) in the mold opening and closing direction with respect to the toggle support (130), and
a mold space adjustment mechanism (180) configured to adjust the interval between the stationary platen (110) and the toggle support (130), and
the control unit (700) is configured to use the acquired actual value of the mold clamping force to adjust the interval between the stationary platen (110) and the toggle support (130) .

10. The injection molding machine (10) according to any one of claims 1 to 9,
wherein the moving mechanism (102) includes
a toggle support (130) disposed at an interval from the stationary platen (110),
a tie bar (140) configured to connect the stationary platen (110) and the toggle support (130) to each other,
a toggle mechanism (150) configured to move the movable platen (120) in the mold opening and closing direction with respect to the toggle support (130), and
a tie bar temperature controller (190) configured to control a temperature of the tie bar (140), and
the control unit (700) is configured to use the acquired actual value of the mold clamping force to control the temperature of the tie bar (140).

11. The injection molding machine (10) according to any one of claims 1 to 10,
wherein the control unit (700) is configured to record and/or display the actual value of the mold clamping force detected at the acquisition timing.

## Patentansprüche

1. Spritzgießmaschine (10), umfassend:
einen Bewegungsmechanismus (102), der konfiguriert ist, eine bewegliche Platte (120) in einer Formöffnungs- und Formschließrichtung in Bezug auf eine stationäre Platte (110) zu bewegen;
einen Formschließ-/klemmkraftdetektor (141), der konfiguriert ist, einen Istwert einer Formschließ-/klemmkraft zu detektieren;
eine Steuereinheit (700), die konfiguriert ist, den Bewegungsmechanismus (102) auf der Grundlage des zu einem vorbestimmten Erfassungszeitpunkt während eines Formungszyklus detektierten Istwerts der Formschließ-/klemmkraft zu steuern; und
eine Anzeigeeinheit (760), die konfiguriert ist, einen Einstellbildschirm (790) anzuzeigen, in den der Erfassungszeitpunkt eingegeben wird,
**dadurch gekennzeichnet, dass** die Steuereinheit (700) konfiguriert ist, den Istwert der Formschließ-/klemmkraft zu erfassen, die zum Erfassungszeitpunkt, der in den Einstellbildschirm (790) eingegeben wird, detektiert wird, und
der Erfassungszeitpunkt des Istwertes der Formschließ-/klemmkraft auf der Grundlage des Erfassungszeitpunktes, der in den Einstellbildschirm (790) eingegeben wird, geändert wird, um einen Wert anzunehmen, der zwischen einem Formschließ-/klemmprozess und einem Formöffnungsprozess liegt.

2. Spritzgießmaschine (10) nach Anspruch 1,
wobei der Einstellbildschirm (790) ein erstes Eingabefeld (791), in das ein Referenzzeitpunkt eingegeben wird, und ein zweites Eingabefeld (792), in das eine Verzögerungszeit oder eine Vorlaufzeit von dem Referenzzeitpunkt bis zu dem Erfassungszeitpunkt eingegeben wird, enthält, und
die Steuereinheit (700) konfiguriert ist, den Istwert der Formschließ-/klemmkraft zu erfassen, der zu dem Erfassungszeitpunkt detektiert wird, der in das erste Eingabefeld (791) und das zweite Eingabefeld (792) eingegeben wird.

3. Spritzgießmaschine (10) nach Anspruch 1 oder 2,
wobei der Einstellbildschirm (790) Wellenformdaten (793), die einen Übergang der Formschließ-/klemmkraft anzeigen, und einen Zeiger (794), der verwendet wird, den Erfassungszeitpunkt auf die Wellenformdaten einzugeben, enthält, und
die Steuereinheit (700) konfiguriert ist, den Istwert der Formschließ-/klemmkraft zu erfassen, die zu dem Erfassungszeitpunkt detektiert wird, der an einer Anschlagposition des Zeigers (794) bestimmt wird.

4. Spritzgießmaschine (10) nach einem der Ansprüche 1 bis 3,
wobei die Steuereinheit (700) konfiguriert ist zu bestimmen, ob der in den Einstellbildschirm (790) eingegebene Erfassungszeitpunkt geeignet ist oder nicht.

5. Spritzgießmaschine (10) nach Anspruch 4,
wobei die Steuereinheit (700) konfiguriert ist, die Einstellung des Erfassungszeitpunkts auszusetzen, bis bestimmt wird, dass der in den Einstellbildschirm (790) eingegebene Erfassungszeitpunkt geeignet ist.

6. Spritzgießmaschine (10) nach Anspruch 4 oder 5,
wobei die Steuereinheit (700) konfiguriert ist, die Anzeigeeinheit (760) zu steuern, einen geeigneten Kandidaten für den Erfassungszeitpunkt auf dem Einstellbildschirm (790) anzuzeigen.

7. Spritzgießmaschine (10) nach einem der Ansprüche 4 bis 6,
wobei die Steuereinheit (700) konfiguriert ist zu bestimmen, dass der Erfassungszeitpunkt geeignet ist, wenn der Erfassungszeitpunkt in eine Zeitzone fällt, in der die Formschließ-/klemmkraft stabil ist.

8. Spritzgießmaschine (10), umfassend:
einen Bewegungsmechanismus (102), der konfiguriert ist, eine bewegliche Platte (120) in einer Formöffnungs- und einer Formschließrichtung in Bezug auf eine stationäre Platte (110) zu bewegen;
einen Formschließ-/klemmkraftdetektor (141), der konfiguriert ist, einen Istwert einer Formschließ-/klemmkraft zu detektieren; und
eine Steuereinheit (700), die konfiguriert ist, den Bewegungsmechanismus (102) auf der Grundlage des Istwertes der Formschließ-/klemmkraft, der zu einem vorbestimmten Erfassungszeitpunkt während eines Formungszyklus detektiert wird, zu steuern,
**dadurch gekennzeichnet, dass** die Steuereinheit (700) konfiguriert ist, den Erfassungszeitpunkt einzustellen und den Istwert der Formschließ-/klemmkraft, der zu dem eingestellten Erfassungszeitpunkt detektiert wird, zu erfassen, und
der Erfassungszeitpunkt des Istwerts der Formschließ-/klemmkraft geändert wird, um einen Wert anzunehmen, der zwischen einem Formschließprozess und einem Formöffnungsprozess liegt.

9. Spritzgießmaschine (10) nach einem der Ansprüche 1 bis 8,
wobei der Bewegungsmechanismus (102) enthält
einen Kniehebelträger (130), der in einem Abstand von der stationären Platte (110) angeordnet ist,
eine Säule (140), die konfiguriert ist, die stationäre Platte (110) und den Kniehebelträger (130) miteinander zu verbinden,
einen Kniehebelmechanismus (150), der konfiguriert ist, die bewegliche Platte (120) in der Formöffnungs- und -schließrichtung in Bezug auf den Kniehebelträger (130) zu bewegen, und
einen Formraumeinstellmechanismus (180), der konfiguriert ist, den Abstand zwischen der stationären Platte (110) und dedemr Kniehebelträger (130) anzupassen, und
die Steuereinheit (700) konfiguriert ist, den erfassten Istwert der Formschließ-/klemmkraft zu verwenden, um den Abstand zwischen der stationären Platte (110) und dem Kniehebelträger (130) anzupassen.

10. Spritzgießmaschine (10) nach einem der Ansprüche 1 bis 9,
wobei der Bewegungsmechanismus (102) enthält:
einen Kniehebelträger (130), der in einem Abstand von der stationären Platte (110) angeordnet ist,
eine Säule (140), die konfiguriert ist, die stationäre Platte (110) und den Kniehebelträger (130) miteinander zu verbinden,
einen Kniehebelmechanismus (150), der konfiguriert ist, die bewegliche Platte (120) in der Formöffnungs- und -schließrichtung in Bezug auf den Kniehebelträger (130) zu bewegen, und
eine Säulentemperatursteuerung (190), die konfiguriert ist, eine Temperatur der Säule (140) zu steuern, und
die Steuereinheit (700) konfiguriert ist, den erfassten Istwert der Formschließ-/klemmkraft zu verwenden, um die Temperatur der Säule (140) zu steuern.

11. Spritzgießmaschine (10) nach einem der Ansprüche 1 bis 10,
wobei die Steuereinheit (700) konfiguriert ist, den Istwert der zu dem Erfassungszeitpunkt erfassten Formschließ-/klemmkraft aufzuzeichnen und/oder anzuzeigen.

## Revendications

1. une machine de moulage à injection (10) comprenant :
un mécanisme de déplacement (102) configuré pour déplacer un plateau mobile (120) dans une direction d'ouverture et de fermeture de moule par rapport à un plateau stationnaire (110) ;
un détecteur de force de serrage de moule (141) configuré pour détecter une valeur réelle d'une force de serrage de moule ;
une unité de commande (700) configurée pour commander le mécanisme de déplacement (102), sur la base de la valeur réelle de la force de serrage de moule détectée à un moment d'acquisition prédéterminé pendant un cycle de moulage ; et
une unité d'affichage (760) configurée pour afficher un écran de réglage (790) sur lequel le moment d'acquisition est entré,
**caractérisée en ce que** l'unité de commande (700) est configurée pour acquérir la valeur réelle de la force de serrage de moule détectée à l'entrée du moment d'acquisition sur l'écran de réglage (790), et
le moment d'acquisition de la valeur réelle de la force de serrage de moule est modifié pour prendre une valeur se trouvant entre un processus de fermeture de moule et un processus d'ouverture de moule, sur la base de l'entrée de moment d'acquisition sur l'écran de réglage (790).

2. La machine de moulage à injection (10) selon la revendication 1,
dans laquelle l'écran de réglage (790) inclut un premier champ d'entrée (791) dans lequel un moment de référence est entré, et un second champ d'entrée (792) dans lequel un temps de retard ou un temps d'avance du moment de référence au moment d'acquisition est entré, et
l'unité de commande (700) est configurée pour acquérir la valeur réelle de la force de serrage de moule détectée au moment d'acquisition entré dans le premier champ d'entrée (791) et le second champ d'entrée (792).

3. La machine de moulage à injection (10) selon la revendication 1 ou la revendication 2,
dans laquelle l'écran de réglage (790) inclut des données de forme d'onde (793) indiquant une transition de la force de serrage de moule, et un pointeur (794) utilisé pour entrer le moment d'acquisition sur les données de forme d'onde, et
l'unité de commande (700) est configurée pour acquérir la valeur réelle de la force de serrage de moule détectée au moment d'acquisition désigné à une position d'arrêt du pointeur (794).

4. La machine de moulage à injection (10) selon l'une quelconque des revendications 1 à 3,
dans laquelle l'unité de commande (700) est configurée pour déterminer si le moment d'acquisition entré sur l'écran de réglage (790) est ou n'est pas approprié.

5. La machine de moulage à injection (10) selon la revendication 4,
dans laquelle l'unité de commande (700) est configurée pour suspendre le réglage du moment d'acquisition jusqu'à ce qu'il soit déterminé que l'entrée du moment d'acquisition sur l'écran de réglage (790) est appropriée.

6. La machine de moulage à injection (10) selon la revendication 4 ou 5,
dans laquelle l'unité de commande (700) est configurée pour commander l'unité d'affichage (760) pour afficher un candidat approprié pour le moment d'acquisition sur l'écran de réglage (790).

7. La machine de moulage à injection (10) selon l'une quelconque des revendications 4 à 6,
dans laquelle l'unité de commande (700) est configurée pour déterminer que le moment d'acquisition est approprié lorsque le moment d'acquisition se trouve au sein d'une zone de temps dans laquelle la force de serrage de moule est stable.

8. La machine de moulage à injection (10) comprenant :
un mécanisme de déplacement (102) configuré pour déplacer un plateau mobile (120) dans une direction d'ouverture et de fermeture de moule par rapport à un plateau stationnaire (110) ;
un détecteur de force de serrage de moule (141) configuré pour détecter une force réelle d'une force de serrage de moule ; et
une unité de commande (700) configurée pour commander le mécanisme de déplacement (102), sur la base de la valeur réelle de la force de serrage de moule détectée à un moment d'acquisition prédéterminé pendant un cycle de moulage,
**caractérisée en ce que** l'unité de commande (700) est configurée pour régler le moment d'acquisition, et acquérir la valeur réelle de la force de serrage de moule détectée au moment d'acquisition réglé, et
le moment d'acquisition de la valeur réelle de la force de serrage de moule est modifié pour prendre une valeur se trouvant entre un processus de fermeture de moule et un processus d'ouverture de moule.

9. La machine de moulage à injection (10) selon l'une quelconque des revendications 1 à 8,
dans laquelle le mécanisme de déplacement (102) inclut
un support à bascule (130) disposé à un intervalle du plateau stationnaire (110),
une barre de liaison (140) configurée pour relier le plateau stationnaire (110) et le support à bascule (130) l'un à l'autre,
un mécanisme à bascule (150) configuré pour déplacer le plateau mobile (120) dans la direction d'ouverture et de fermeture de moule par rapport au support à bascule (130), et
un mécanisme d'ajustement d'espace de moule (180) configuré pour ajuster l'intervalle entre le plateau stationnaire (110) et le support à bascule (130), et
l'unité de commande (700) est configurée pour utiliser la valeur réelle acquise de la force de serrage de moule pour ajuster l'intervalle entre la platine stationnaire (110) et le support à bascule (130).

10. La machine de moulage à injection (10) selon l'une quelconque des revendications 1 à 9,
dans laquelle le mécanisme de déplacement (102) inclut
un support à bascule (130) disposé à un intervalle du plateau stationnaire (110),
une barre de liaison (140) configurée pour relier le plateau stationnaire (110) et le support à bascule (130) l'un à l'autre,
un mécanisme à bascule (150) configuré pour déplacer le plateau mobile (120) dans la direction d'ouverture et de fermeture de moule par rapport au support à bascule (130), et
un régulateur de température de barre de liaison (190) configuré pour réguler une température de la barre de liaison (140), et
l'unité de commande (700) est configurée pour utiliser la valeur réelle acquise de la force de serrage de moule pour réguler la température de la barre de liaison (140).

11. La machine de moulage à injection (10) selon l'une quelconque des revendications 1 à 10,
dans laquelle l'unité de commande (700) est configurée pour enregistrer et/ou afficher la valeur réelle de la force de serrage de moule détectée au moment d'acquisition.
